# EUROPEAN PATENT SPECIFICATION

(11) **EP 0 345 851 B1**
(45) Date of publication and mention of the grant of the patent: **29.12.1993**
(21) Application number: 89201333.5
(22) Date of filing: 24.05.1989
(51) Int. Cl.: H02B 1/26, H02B 1/04

(54) **Switch box for electrical installations**
Schaltschrank für elektrische Anlagen
Armoire pour installation électrique

(30) Priority: 07.06.1988 NL 8801467
(43) Date of publication of application: 13.12.1989
(73) Proprietor: HOLEC SYSTEMEN EN COMPONENTEN B.V., NL-7555 CS Hengelo (NL)
(72) Inventor: Tanuhardja, Mike Mulyana, NL-7552 VP Hengelo (NL); Van 't Veen, Daniel, NL-7609 GR Almelo (NL); Wensink, Jan Bertus, NL-7496 AJ Hengevelde (NL); Hoekstra, Jan Willem, NL-7558 EP Hengelo (NL)
(74) Representative: de Bruijn, Leendert C.

(56) References cited:
- CH-A- 483 733
- FR-A- 1 430 796
- GB-A- 2 171 846

## Description

The invention relates to a switch or distribution box for electrical installations and in particular to a switch box intended for domestic electrical installations, comprising an input element, an output element and at least one detachable connecting element for interconnecting the input and output elements.

The switch boxes used up to now for connection of domestic electrical installations to the grid power supply are of a very large number of different types, depending on the desired and required application (at present there are approximately 700 different designs!). The necessity of manufacturing such a large number of different boxes and keeping these in stock gives a high degree of inefficiency and accordingly has the effect of increasing costs.

Moreover, the complete installation must satisfy a number of safety requirements. For this purpose an installation will have to be installed by a recognized installer, after which connection to the public power grid is made only after the installation has been approved by the appropriate authority, usually a local power company, as meeting the safety requirements. Such an approval can be expected when at least the material used has itself already been approved. The greater the total material used has itself already been approved. The greater the total number of variations, the greater the number of material inspections which will be necessary, which has the effect of further increasing costs and is time-consuming.

The installations used at present comprise one or more groups, each of which, in addition to the normal switching functions, must be protected against short circuit currents, overload currents and possible loss currents to earth. This group protection can be designed with two separate components, for example a fusible cut-out with a switch, but is currently frequently combined in a single component.

An electrical connection system for making interconnections between an input element and an output element by a single detachable connecting element is disclosed in French Patent Specification 1 430 796. The embodiment shown relates in particular for incorporating electrical or electronic devices, e.g. RF amplifiers, in an electrical installation such as a cable television network. Complying with safety requirements, as is the case for distributing mains electricity, is not a design item in said French Patent Specification.

The aim of the invention is to provide a switch box with which the abovementioned disadvantages are avoided and, at the same time, a high degree of flexibility and safety is achieved.

According to the invention, this aim is achieved in that the switch box is designed in the form of a modular system, comprising a modular input element which can be installed separately and housing a current limiting switch and associated electrical wiring, contacts and terminals for the connection, on the one hand, of a main power supply line and, on the other hand, contacts and terminals for connection to corresponding contacts and terminals of a detachable modular connecting element, and a modular output element which can be installed separately and having contacts and terminals for the connection, on the one hand, of outlet lines to the electrical installation and, on the other hand, contacts and terminals for connection to corresponding contacts and terminals of the detachable modular connecting element.

The modular system design according to the invention ensures that the input and output elements provide those functions in the installation, which are always necessary for all possible electrical installations or groups to be connected. The modular input element, with the current limiting switch, contains a main protection element against short circuit currents, the specific functioning thereof being that when short circuit currents of high current strength occur in the groups (electrical installations) located downstream, this switches in such a way that only a current of limited current strength is allowed through. This makes it possible to allow the input element to function as a current limiting element for all groups to be connected and thus to function mainly as the main protection element, which element can be fully wired in the factory and can then be provided with a safety quality mark and can be supplied as a module element. Independently of this, the output element can be manufactured in the factory as a module element which functions as a necessary element for connecting up with groups connected thereto and which likewise can be supplied provided with a safety quality mark. The two module elements can then simply be installed, as approved elements, by an installer on site.

Because a short-circuit protection is needed for all groups, this function is designed for all groups together and embodied in a single component, which has the advantage that the other protecting components for a group of the electrical installation can be of more simple design. On the other had, however, measures must be taken to prevent it being possible for simplified components of this type to be used separately. Accordingly, features have to be provided wich facilitate a correct electrical connection between the modular input and output elements by a modular connecting element; i.e. to prevent connection mistakenly made incorrectly or by an incorrect component choice.

Features of this type can consist of positioning means which are known per se, such as, for example, interacting cams fitted on the surfaces of the connecting elements and the input and output element which face one another, or of interacting pins and holes etc. A particularly efficient facility for correct positioning of the connecting elements is, in a further embodiment of the invention, achieved by a special placing and ordering of the contacts and terminals of the input and output elements and the connecting elements.

The invention further relates to a modular connecting element comprising electrical circuits and contacts and terminals for connection to corresponding contacts and terminals of modular input and output elements of a switch box, the modular connecting element having means to provide a predetermined interconnection of the modular input and output elements by a correct positioning of the modular connecting element on the input and output elements.

The advantage of such an embodiment of the system according to the invention is that the modular input and output elements can be fitted by an installer, after which any desired combination between the two module elements is possible without the danger that the electrical installation will function incorrectly.

The electrical circuits used in the modular connecting elements can be of various types, such as switching means having a switching function depending on pre-set conditions. A very effective switching component which can be used is, for example, an auxiliary switch protected against loss currents to earth and/or overloading. In combination with the current limiting switch designed as the main protection element in the modular input element, a system which operates very effectively can be obtained by this means. When a short circuit current occurs in one of the connected groups, the current is limited by the current limiting switch so that complete switching-off of all groups does not take place. As a result of the switching off of the auxiliary switch, designed as a safety element, in the connecting element of the group or groups in which the short circuit current has occurred, the current limiting switch again fully switches in, as a result of which the complete current strength becomes available for the other groups again.

With a switch box designed as a modular system as indicated above, the following significant advantages are obtained:
- it is possible to switch on and off per group,
- it is possible to protect against overload and/or earth fault currents per group,
- it is possible to protect against short circuit currents per phase via a central current limiting device, and, while retaining as great as possible a degree of flexibility, only two or three designs of the input and output elements being needed to enable use in all possible forms, as a result of which only a few elements have to be produced and have to be kept in stock. The elements can be supplied to the specifications of the installer and a separate safety quality mark is not needed for each specific application but only for the complete assembled combination.

To illustrate the basic concept of the invention reference is made here to the circuit diagram A shown in the appended drawing, in which diagram a domestic installation switch box SK is shown, intended for the connection of four groups g1, g2, g3 and g4 to the power supply grid. The power supply cable comes in, via a main fusible cut-out and a power consumption meter (kWh), in the conventional manner and is connected via a central current limiting switch SBE to a branch line with four branches with terminal elements a1, a2, a3 and a4. The branches a1, a2 and a3 are connected via their terminal elements, each via an auxiliary switch, HS1, HS2 and HS3 respectively, protected against loss currents to earth and overload currents, to the group connection g1, g2 and g3 respectively, while the branch a4 is connected via an auxiliary switch HS4, which is protected only against overload, to the group connection g4. According to the invention the current limiting switch with the branches and the associated terminal elements a1, a2, a3 and a4 are accommodated in a modular input element IE, and the group connections g1, g2, g3 and g4 in a separate modular output element UE, while the desired connections of the branches a1, a2, a3 and a4 are effected via the auxiliary switches HS1, HS2, HS3 and HS4 to the group connections g1, g2, g3 and g4 via separate connecting module elements, VE1, VE2, VE3 and VE4 respectively, to be detachably connected.

However, it will be clear that within the scope of the invention it is possible to use connecting elements having safety elements other than those indicated above which are designed as auxiliary switches protected against loss currents to earth and/or overload currents, while, furthermore, connecting elements having switching components fulfilling functions other than a safety function can be used. This will be discussed further below.

With regard to the system of connections to be used between, respectively, the connecting elements and the input and output element, various designs are possible within the scope of the invention. An effective design is obtained according to the invention using a plug-in system, the connecting elements preferably being provided with push-in plug-type contact and terminals, and the input and output elements with contact and terminals receiving the push-in plugs of the connecting elements, the contact and terminals being connected by electrical conductors which are accommodated, respectively, in the input element and the output element. With this design the contact and terminals of the input element and the output element are preferably located inside these elements, the input element and the output element then being provided with push-in openings with which the contact and terminals of these elements are in line. In principle, the push-in plugs and the receiving contact and terminals described above can also be reversed and fitted, respectively, on the input and output element and in the connecting element.

Furthermore, an effective design is obtained in that the contact and terminals fitted in the input element and the output element are formed by conductors designed as conducting rails in strip-form, which conductors are provided with terminal openings for receiving push-in plugs of connecting elements, which terminal openings are in line with push-in openings made in the front wall of, respectively, the input element and output element.

In the case of a switch box intended for domestic installations, the conductors in the input element can consist of, respectively, single-phase or multi-phase conductors and furthermore of a neutral wire and an earth wire, while the output element contains single-phase or multi-phase conductors and neutral wires. The system described above offers a very effective possibility for preventing incorrect connections between, respectively, a connecting element and an input element and output element to be connected to one another via this connecting element by ordering the terminal openings and the push-in openings, which are in line with these in, respectively, the input element and output element in such a way that the possibility of inserting push-in plugs of connecting elements in undesired terminal openings of the respective conductors is prevented.

The connecting elements to be used can be made up in various ways. In principle, they can be made up of a base element which is provided with contact and terminals (push-in plugs), intended to be connected to contact and terminals of the input and output element (in the case of push-in plugs to be pushed into the respective push-in openings and terminal openings of the input element and the output element), and of an element provided with a switching component for making the desired electrical connection between the input element and the output element via the contact and terminals, or for fulfilling a switch function which is dependent on pre-determined conditions. The said base element and the element containing the switching component can, in this case, be designed as separate elements, the base element serving as an adaptor for various switching components to be fitted. Preferably, a base element and an element containing a switching component are integrated into a connecting element which forms a box-type element.

The invention will now be explained in more detail with the aid of the drawing in which, by way of example, several embodiments of a switch box according to the invention are shown, it being emphasized that the invention is not restricted to the embodiments shown.

It is furthermore pointed out that the circuit diagram A shown in the figures has already been discussed above.

Fig. 1 shows somewhat schematically a perspective view of an embodiment of an assembled switch box according to the invention.

Fig. 2 shows in more detail a vertical transverse section through a preferred embodiment of the switch box according to the invention.

Fig. 3 shows a perspective view of the assembled input element and output element, without connecting elements and without closing lid sections.

Fig. 3a shows schematically a front view of the input and output elements according to Fig. 3 with the order of the push-in openings in the front walls.

Fig. 4 shows a perspective view with dismantled parts of the rail container section of the input element of a switch box according to Fig. 3.

Fig. 4a shows schematically a front view of a special connecting body to be used when employing an extension box.

Fig. 5 shows a cross section of a preferred embodiment of an input element of the switchbox, the container-shaped main section, the rail container section and the container-shaped lid section being manufactured in one piece and connected to one another by hinges.

Figs. 6a and 6b show, respectively, a front view and a transverse section of a possible embodiment of the output element of the switch box according to the invention.

Fig. 7 shows a front view of a possible embodiment of an auxiliary rail and neutral rail which can be used in the input element according to Figs. 1, 2, 3 and 4.

Fig. 8 shows a front view of an embodiment of a single-phase rail which can be used in the input element according to Figs. 1, 2, 3 and 4.

Fig. 9 shows a front view of one of the component rails (rail 30 in Fig. 4) of a three-phase rail which can be used in the input element according to Figs. 1, 2, 3 and 4.

Fig. 9a shows a detailed cross section through a terminal opening of the rail shown in Fig. 9.

Figs. 10a and 10b show, respectively, a front view and a transverse section through the neutral and phase rails and extra rails to be fitted in the output element according to the preceding figures.

Fig. 10c shows a transverse section through an output element, in which conductor rails of a design which is somewhat modified relative to the form shown in Figures 10a and 10b are used.

Figs. 11a, 11b and 11c show, respectively, a front view of a connecting element for a single-phase connection and of a connecting element for a three-phase connection and a side view of the connecting elements, which connecting elements can be used in the switch box according to Figs. 1, 2, 3 and 4.

Fig. 11d shows a side and front view of a push-in plug of a connecting element according to Fig. 11.

Fig. 12a shows schematically a front view of a modified embodiment of the switch box according to the invention, the front wall and the top wall of the output element being provided with three rows of push-in

Fig. 12b shows schematically a transverse section through the output element shown in Fig. 12.

Figs. 13a and 13b show, respectively, a connecting element for a single-phase connection and a connecting element for a three-phase connection to be used in a switch box according to Fig. 12.

Figs. 14a, 14b and 14c show schematically views of secondary connecting elements which can be used in the switch box according to Figs. 1 to 4 inclusive.

Figs. 15a and 15b show, respectively, a front view and a side view of an embodiment of a connecting element for connecting a bell-ringing transformer.

Figs. 16a and 16b show, respectively, a front block and a plug block that can be used for connecting a connecting element according to Figs. 15a and b.

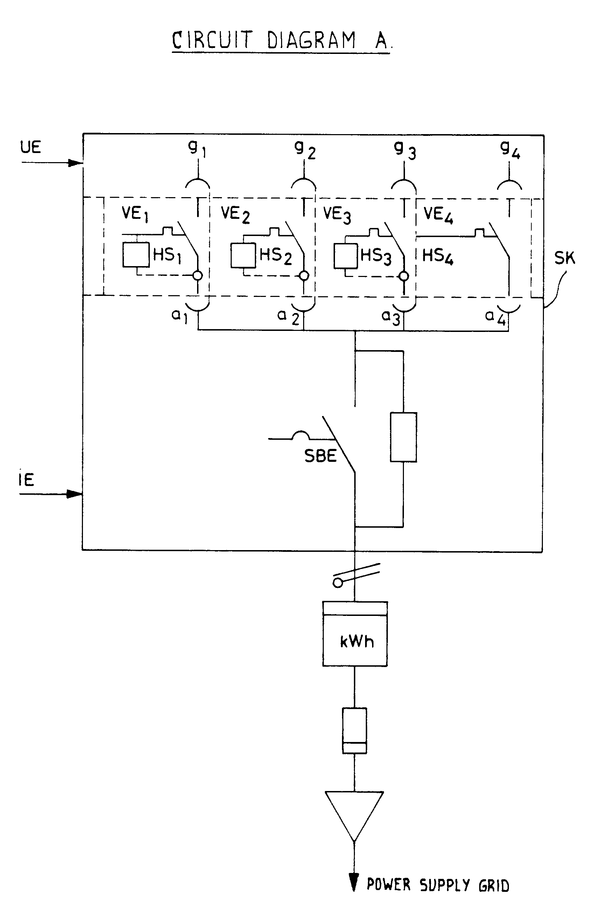

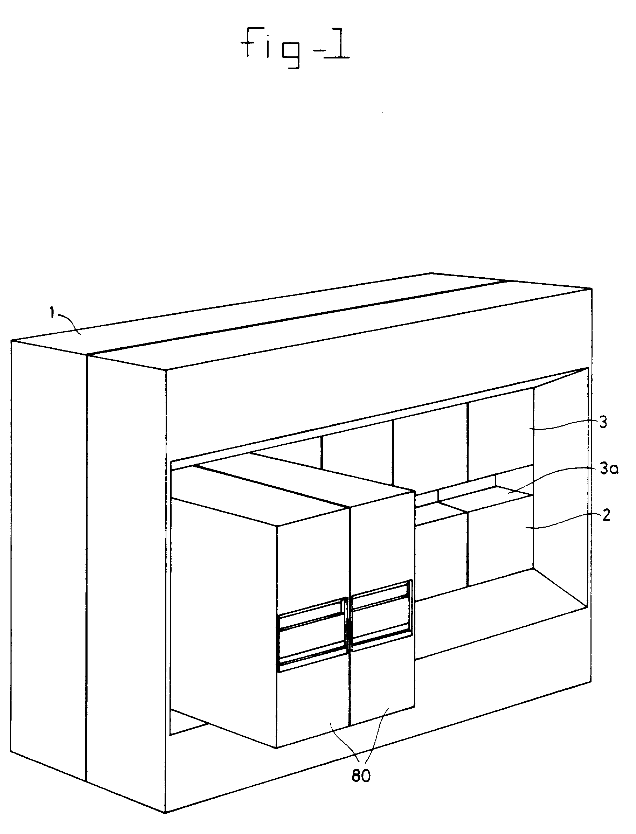

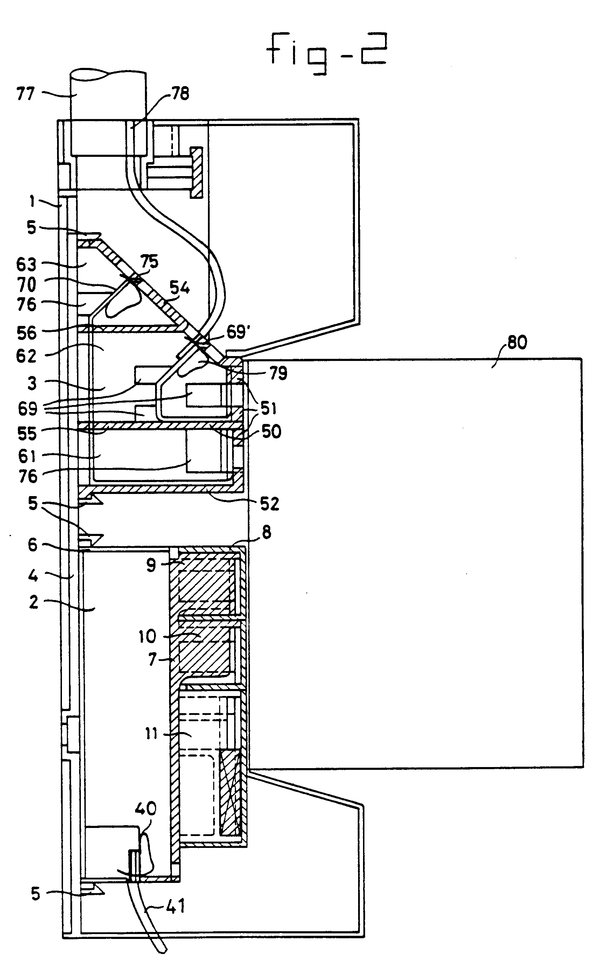

In Fig. 1 a switch box according to the invention is shown in contour, and in the completely assembled state. The switch box comprises a lower case 1, which, for example, is firmly fixed to a wall. The switch box is further made up of a box-shaped input element 2 (see also Figs. 2 and 3) and a box-shaped output element 3, which can be detachably affixed to the rear wall 4 of the lower case 1, via previously attached fixing elements 5. The input element consists of three parts, namely a container-shaped main section 6, a container-shaped rail section 7 and a container-shaped lid section 8.

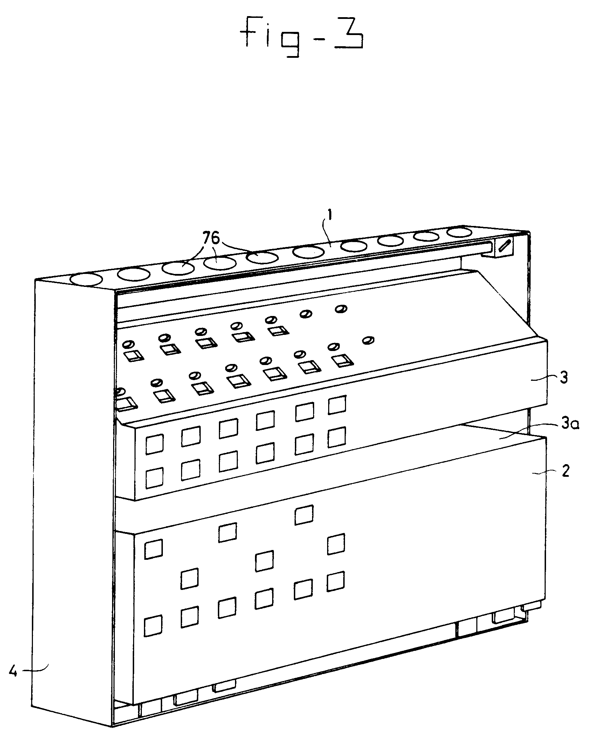

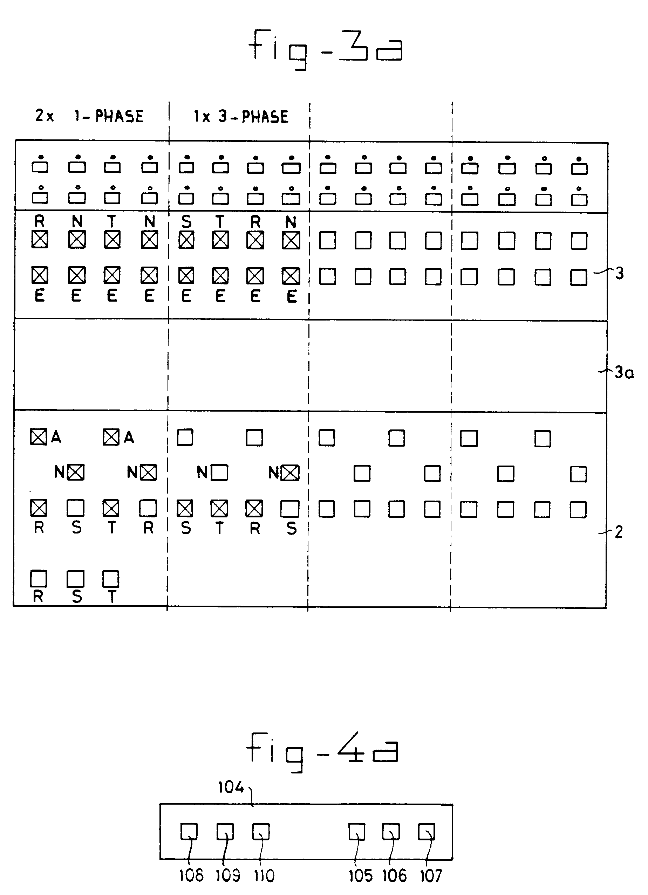

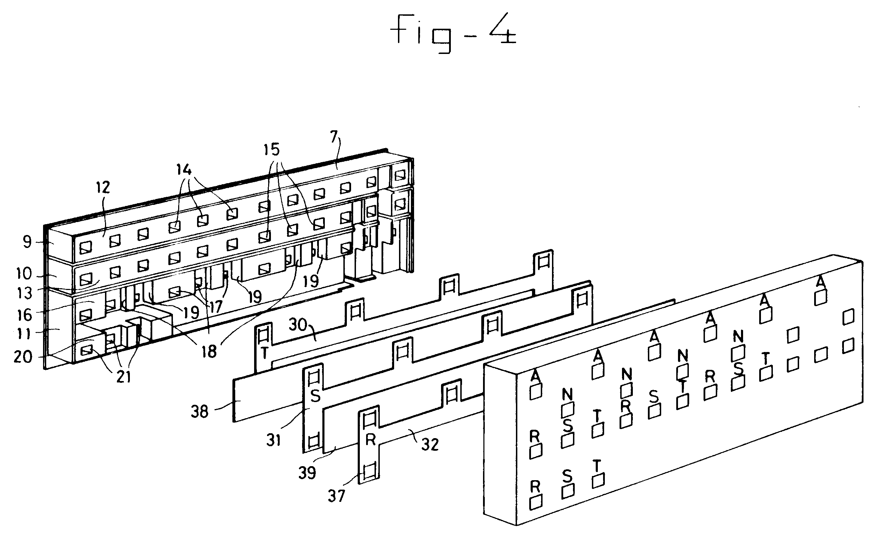

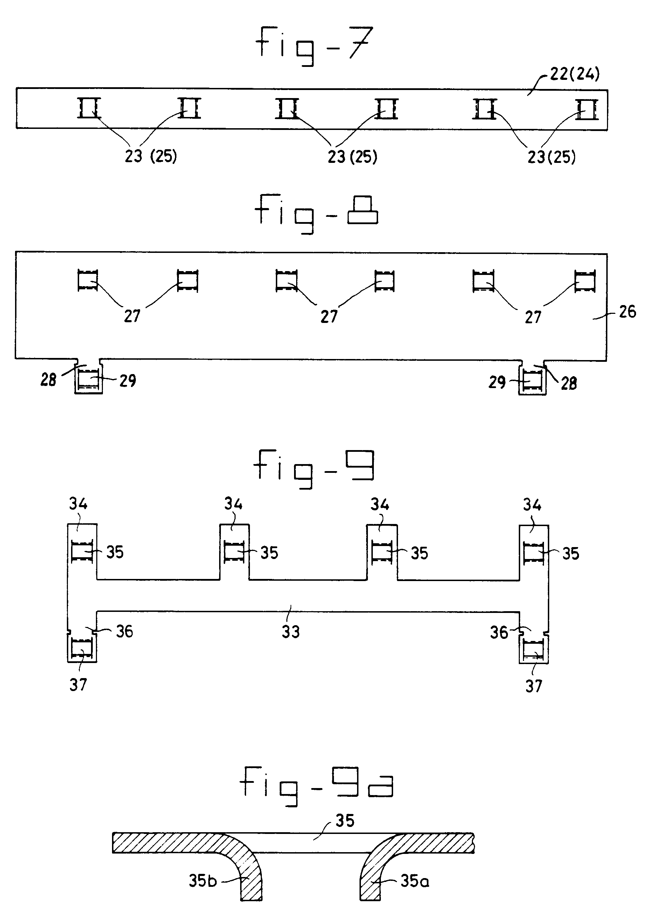

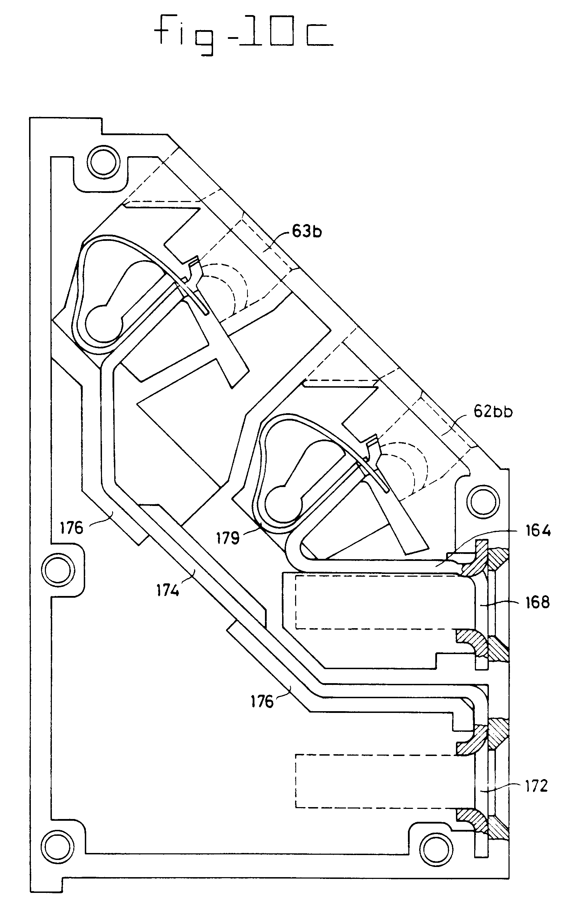

The rail container section 7 is subdivided into three compartments 9, 10 and 11 which at least extend over the width of the rail container section and are positioned underneath one another. The compartments 9 and 10 are filled with supporting walls 12 and 13 respectively (see Fig. 4), each of which are provided with a row of openings 14 and 15 respectively, which openings are regularly spaced, the openings 14 in the wall 12 in the embodiment shown being vertically in line with the openings 15 in the wall 13. The compartment 11, which has a greater height than the compartments 9 and 10, is provided in the upper section with a supporting wall 16 which extends in the horizontal direction over the whole compartment and which likewise is provided with a row of openings 17 which are regularly spaced in the horizontal direction like the openings 14 and 15 and likewise are vertically in line with the openings 14 and 15. Of the openings 17, however, in each case seen from left to right in Fig. 4, the 1st, 4th, 7th, 10th etc. lie in a common plane with the openings 14 and 15, the 2nd, 5th, 8th and 11th lie in a somewhat deepened groove 18 and the 3rd, 6th, 9th and 12th in a somewhat more deepened groove 19 of the supporting wall 16. Seen in Fig. 4, a small supporting wall 20 which has three openings 21 which are vertically in line with the first three openings 17 in the supporting wall 16 is fitted in the left-hand portion. An auxiliary conductor rail 22 with the shape shown in Fig. 7 is fitted against supporting wall 12 of the compartment 9. The auxiliary conductor rail 22 consists of a strip of conducting metal which is provided with a number of terminal openings 23 which are spaced at a mutual grid spacing which is equal to twice the distance from the openings 14 in the supporting wall 12. The openings 23 are shown as rectangular in the embodiment shown and have two opposite edges 23a and 23b bent over in the manner indicated in Fig. 9a. The auxiliary rail 22 is placed against the supporting wall 12 in such a way that - seen in Fig. 4 - the first opening 14 (on the left-hand side) in the supporting wall 12 comes in line with the first opening 23 (on the left-hand side) of the conductor rail 22, so that in Fig. 4 the first, third, fifth and seventh opening 12 are always in line with, respectively, the first, second and third opening 23 of the conductor rail 22. A similar conductor rail 24, which serves as a neutral rail and which is connected to the neutral rail of a main supply line, is fitted against the supporting wall 13 in the compartment 10, but in such a way that the openings 25 thereof are offset one position to the right relative to the openings 23 of the auxiliary rail and specifically in such a way that they lie in line with, respectively, the second, fourth, sixth, eighth etc. opening 15 of the supporting wall 10. The compartment 11 is intended for fitting a phase rail. When the box is used as a switch box for a single-phase current, a so-called single-phase rail of the form shown, for example, in Fig. 8 can be fitted. The single-phase rail shown in Fig. 8 consists of a strip 26 of conducting metal, which has a greater height dimension than the conductor rails 22 and 24, shown in Fig. 7. When determining the cross section of the rails, account must, of course, be taken of the current strength to be expected. The strip is provided in the uppermost part with terminal openings 27, which here also are shown with a rectangular shape and which are at a mutual grid spacing which likewise corresponds to the mutual spacing of the terminal openings in the neutral rail 24, located above, and the auxiliary rail 22. The single-phase rail is fitted in such a way that the first opening 27 (on the left-hand side in the figure) is in line with the first opening 17 in the supporting wall 16 etc.

Furthermore, the underside of the strip 26 is provided on the left-hand side with a downwards projecting lip 28, provided with a terminal opening 29, which in the assembled state of the rail is in line with the first opening 21 of the small supporting wall 20. The purpose of this will be explained in more detail below in the description.

When the box is used as a switch box for a three-phase current, a three-phase rail is used, as shown in Fig. 4. The three-phase rail shown in the drawing is made up of three identical single-phase rails 30, 31 and 32 respectively of, for example, the shape shown in Fig. 9, in which one of the single-phase rails 30 is shown. The single-phase rail shown in Fig. 9 contains a strip-shaped body section 33 and upwardly projecting lips 34, which are made in one piece with the rail and each of which is provided with a terminal opening 35 of the shape indicated in Fig. 9a. The lips and the openings are fitted such that the mutual grid spacing of the openings 35 is three times as great as the mutual grid spacing of the openings 17 in the supporting wall 16.

Moreover, the body section 33 is provided on the two ends with a downwardly projecting lip 36, each provided with a terminal opening 37.

The rails 31 and 32 are identical to the rail 30 and are not further discussed in detail here.

When assembling the three-phase rail, the rails 30, 31 and 32 are positioned against one another with the insertion of insulating partitions 38 and 39, the rail 31 being offset one position (hole spacing of the holes 17) horizontally to the right relative to the rail 32, and the rail 30 likewise being offset one position horizontally to the right relative to the rail 31.

After fitting, the three-phase rail assembled in this way now assumes a position such that the lips 34 of the rail 32 lie against the parts of the supporting wall which are located the furthest forward, the terminal openings 35 being in line with the respective openings in the parts (first, fourth, seventh, etc. openings 17), the lips of the rail 31 come to lie in the somewhat deepened groove 18 of the supporting wall with the terminal openings in line with the openings 17 located therein in said grooves (second, fifth, eighth, etc. openings 17) and the lips of the rail 30 come to lie in the most deepened grooves 19 with the terminal openings in line with the openings made therein in said grooves (third, sixth, ninth, twelfth openings 17). With this arrangement, the respective openings 37 in the downwards projecting lips 36 respectively come to lie in line with the openings 21 in the lowest small supporting wall 20.

After fitting the conductor rails in the rail container 7, these are covered at the front by the cover 8, the cover face of which (front face after fitting) is provided with rows of push-in openings A, N, R, S, T, which after fitting of the cover are in line with the respective terminal openings of the fitted conductor rails. The push-in openings of the cover indicated by A in the figure lie in line with the terminal openings 23 of the auxiliary rail 22, the push-in openings indicated by N lie in line with the terminal openings 25 of the neutral rail 24, the push-in openings indicated by R lie in line with the terminal openings 35 of the phase rail 32 of the three-phase rail, the push-in openings indicated by S lie in line with the corresponding terminal openings of the rail 31 and the openings indicated by T lie in line with the terminal openings of rail 30. The order shown provides a facility which to a far-reaching extent prevents the possibility of incorrect connection of connecting elements to be fitted, as will be explained further below in the description.

As can best be seen in Fig. 2, the main section 6 of the input part 2 is located behind the rail container 7 and provided with a connection terminal 40, to which a main supply line 41 is connected. The so-called current limiting switch is fitted in the main section with the associated wiring and any further circuit components, the limiting switch being connected on one side to the main supply line and on the other side - on the output side -to the neutral rail and phase rail, which are fitted in rail container 7.

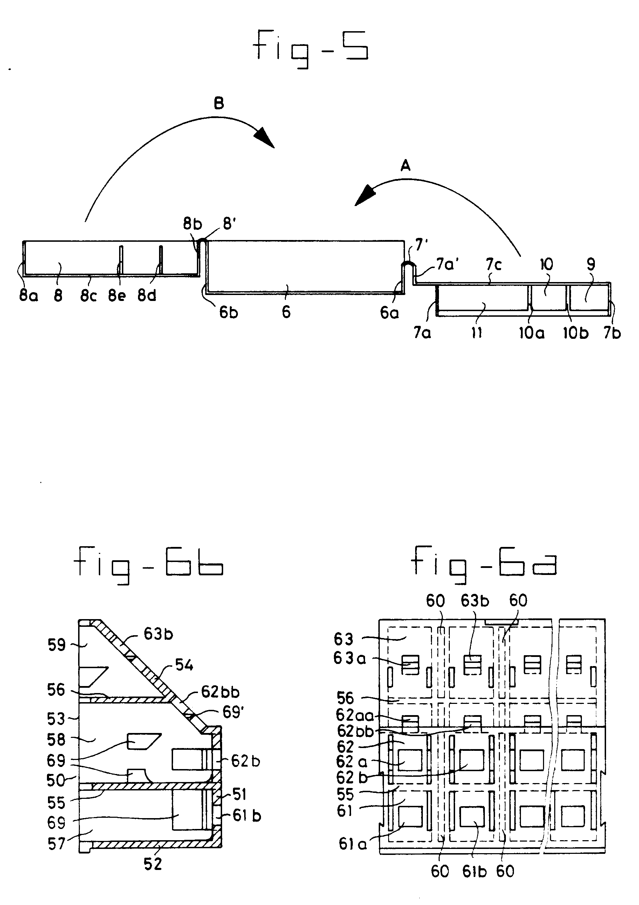

The main section 6, containing the current limiting switch, the rail container section 7 and the cover section 8 of the input element can consist of separate parts, but preferably the rail container section 7 and the container-shaped cover section 8 are connected by hinges to the container-shaped main section 6 at opposite sides of the latter, so that the three parts can be folded open. A very effective embodiment is shown in Fig. 5, according to which embodiment a container-shaped main section 6, the rail container section 7 and the cover section 8 and the hinge pin 7′ and 8′ are produced in a single operation by injection moulding. The side wall 6b of the main section is connected via the so-called integral hinge 8′ to the side wall 8b of the cover section 8, while the side wall 6a, which is opposite the side wall 6b and is lower than the side wall 6b, is connected via the integral hinge 7′ to a section 7a′ which protrudes from the base 7c in a direction opposite to the direction in which the side wall 7a extends from the base, which section 7a′ is offset towards the outside relative to the side wall 7a and has a length equal to the difference in length between the side walls 6a and 6b of the main section. The rail container 7 is furthermore subdivided into the compartments 11, 10 and 9, in which the supporting walls 16, 13 and 12 respectively are positioned (see Fig. 4) and between which slots 10a and 10b extend in which, after the rail container has been hinged in its position in the direction of arrow A, partitions 8d and 8e respectively, which protrude from the cover surface 8c, slot, to provide protection, during the subsequent hinging of the cover 8 in the direction of arrow B. The cover surface 8c of the cover is provided with the pattern of push-in openings described above.

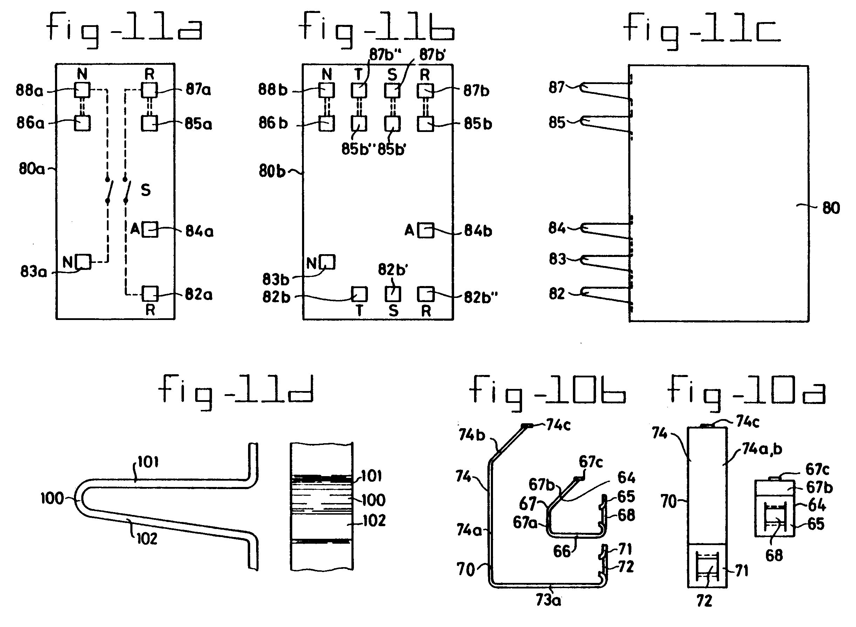

An embodiment shown in Figures 1, 2, 3, 6a and 6b of the output element or domestic connection part 3 will now be discussed. In the embodiment shown, the output element 3 consists of a box-shaped housing 50 (see Fig. 6b) with a vertical front wall 51, a horizontal base 52, a back 53 which is higher than the front wall 51 and a sloping top wall 54 which connect the front wall and the back to one another. The box 50 is also divided by horizontal intermediate partitions 55 and 56 into three sections 57, 58 and 59, which extend in the horizontal direction and are separated from one another, while each of the horizontal spaces 57, 58 and 59 respectively is subdivided by vertical partitions 60, which extend over the entire height of the box, into a number of separate compartments adjacent to one another in the horizontal direction, these compartments being, respectively, 61 in the lowest space 57, 62 in the intermediate space 58 and 63 in the uppermost space 59. As shown, the horizontal intermediate partitions 56 and 55 are fitted such that the lowermost compartments 61 in the horizontal space 57 extend in the height direction approximately over the lower half of the front wall 51, while the compartments 62 extend at the front over the uppermost part of the front wall 51 and at their top side also comprise the lowermost part of the sloping top wall 54, while the uppermost compartments 63 in the uppermost space have as their upper wall the uppermost part of the sloping upper wall 54. The lowermost compartments 61 each contain a push-in opening 61a, 61b, ... etc. respectively (from left to right in Fig. 6a) in their front wall. The intermediate compartments each contain a push-in opening 62a, 62b, ... etc. respectively (from left to right in Fig. 6a) in their front wall and a terminal opening 62aa, 62bb, ... etc. respectively (from left to right in Fig. 6a) in the sloping top wall, while the uppermost compartments 63 are each provided with a terminal opening 63a, 63b ... etc. (from left to right in Fig. 6a.) in their top wall. All openings 61a, 62a, 62aa, 63a; 61b, 62b, 62bb, 63b; ... etc., viewed in the vertical direction, are in line with one another and moreover in line with the terminal openings R, S, T in the cover 8 of the rail container 7 of the input part 2. A conductor rail 64 is fitted in each of the compartments 62, in order to enable an electrically conducting connection to be made in between the openings 62a and 62aa etc. For this purpose the conductor rails 64 can have a shape as in shown in Figs. 10a and 10b. The conductor rail 64 in this case consists of a strip-shaped element, which has a width corresponding to the width of a compartment and which, in transverse section (see Fig. 10b) is bent into essentially a U-shape. The U-shaped element has a short vertical leg 65, a horizontal body section 66 and a leg 67, which consists of a vertical section 67a and a section 67b which slopes inwards and upwards from section 67a and is provided at its upper edge with a small horizontally extending lip 67c which is at some distance from and at a greater height than the opposite upper edge of the first leg 65. A terminal opening 68 of the same dimensions and shape as described with the aid of Fig. 9a has been made in the leg 65. The conductor rails 64 are clamped in the compartments 62 between terminals 69, fitted for this purpose to the walls, in a position such that the terminal openings 68 are in line with the push-in openings 62a, b etc., made in the front wall 51, while the upper edge of the legs 67 come to lie against the upper wall 54, specifically in a manner such that the outside of the legs is adjacent to the lower edge of the terminal openings 62bb in the upper wall 54. The small lips slot into the small slots 69′ made in the upper wall.

Furthermore, a second conductor rail 70 is shown in Fig. 10b, which has approximately the same shape as rail 64. The short vertical leg 71 is likewise provided with a terminal opening 72 of the same shape as the opening 68 in the rail 65. The horizontal body section 73 is longer than the base 66 of rail 64, while the other leg 74 also extends over a greater height than the leg 67 of rail 64. In particular, the vertical section 74a of leg 74 is appreciably longer than the vertical section 67a of rail 64. The sloping section 74b is likewise provided at the upper edge with a small fixing lip 74c, intended to be pushed into a small slot 75 in the upper wall 54 during assembly. After assembly, the leg 71 of the rails 70 lie against the front wall 51, the terminal openings 72 lying in line with the push-in openings 61a, 61b ... etc., while the horizontal body section of the rails rests on the base 52 of the box 50 and extends to close to the back wall 53 thereof, and the vertical section 74a of the rails extends upwards through slots in the intermediate portions 55 and 56 into the uppermost compartments 63, where they project, with the obliquely bent-over section 74b, through these compartments and lie, with their upper edges, against the sloping upper wall, such that the outside of the parts 74b are adjacent to the lower edges of the terminal openings 63b in the upper wall 54. The small lips 74c slot into the small slots 75. The rails 70 are clamped between terminals 76, fitted respectively to the inner walls of the compartments 61 and 63. In the upper wall of the lower case 1 a number of inlet openings for installation tubes 27 are made for connection leads 78 to domestic installations. In the embodiment shown the connection leads 78 are connected to the rails 64 via the terminal openings 62bb in a manner as indicated below. The rails 64 are provided for this purpose with connection terminals 79 which are known per se.

It is obvious that other embodiments of electrical conductors and output elements are possible within the scope of the invention. In Fig. 10c a modified embodiment of connector rails is shown, which in principle fulfill the same function as the connector rails 64 and 70 shown in Figs. 10a and 10b but differ therefrom only in shape.

Without going into more detail with regard to the differences in shape, which will be clear on comparison of Fig. 10c with the Figs. 10a, 10b, 6a and 6b described in detail above, it is pointed out that the most important corresponding functional components in Fig. 10c are indicated with the reference numbers of the components of Figs. 10a, 10b, 6a and 6b and also Fig. 2, increased by 100. Yet further embodiments are conceivable, it not being essential for the upper wall 54 to have the indicated sloping shape. However, for safety considerations it is appropriate that the output element has a shape such that the push-in openings for the connecting elements are in a different plane from the push-in openings on the output side of the output element.

The input and output elements, designed in the manner described above, of the switch box according to the invention serve firstly for the connection of domestic installations to the incoming current supply line 41. For this purpose the two input and output elements 2 and 3 are connected to one another by connecting elements, only the contours of which are shown in Figs. 1 and 2. In the embodiment shown, connecting elements 80 of this type possess a box-type housing 81 in which a switching component with the desired function, such as a protected auxiliary switch against earth fault currents, an automatic load meter, a bell-ringing transformer, a timer and the like can be fitted, the design and operation of which can be different and will not be discussed in more detail here. The connecting elements 80 are of various designs, depending on the application with regard to the connection of a single-phase current or of a three-phase current. For the connection of a single-phase current, the connecting element has terminals for connection on one side to the phase rail, neutral rail and auxiliary rail in the input element 2 and on the other side terminals for connection to the conductor rail of one of the two rows in the output element 3. A front view of two connecting elements of this type are shown in Figs. 11a and 11b. A connecting element 80a intended for the connection to a single-phase current is shown in Fig. 11a. This connecting element is provided on its front side (the side which on fitting is facing towards the push-in openings in input and output elements respectively) with push-in plugs 82a, 83a, 84a, 85a, 86a, 87a and 88a. The push-in plug 82a is intended to be pushed into a push-in opening for single-phase rail indicated by R, S or T in Fig. 3a, plug 83a then pushing into the push-in opening of a neutral rail indicated by N in Fig. 3a, which opening is offset one position to the right, and the terminal plug 84a pushing into the push-in opening indicated by A in Fig. 3a for the auxiliary earth rail which is in line with the opening R, S or T for the push-in plug 82a. As indicated schematically in Fig. 11a, the push-in plug 88a is connected via the switch S, which can be, for example, a switch protected against earth fault currents, to the push-in plug 83a, and the push-in plug 87a is connected to the push-in plug 82a. The push-in plugs 87a and 88a respectively are pushed into two adjacent push-in opening R, S or T and N in the uppermost row of push-in openings of the output element 3 (see Fig. 3a) which are in line with the abovementioned push-in openings R, S or T and N of the element 2 in which push-in plugs 82a and 83a are pushed. The plugs 85a and 86a which are connected directly to the plugs 87a and 88a respectively then push into the push-in openings E of the lowest row, which are in line with the abovementioned push-in plugs into which the plugs 87a and 88a are pushed.

Fig. 11b shows a connecting element 80b intended to be connected to a three-phase current. This connecting element is provided on its front side with push-in plugs 82b, 82b′, 82b˝, 83b, 84b, 85b, 85b′, 85b˝, 86b, 87b, 87b˝ and 88b. The push-in plugs 82b, b′ and b˝ are intended to be pushed into adjacent push-in openings R, S, T of the three-phase rail in the input element 2 (see Fig. 3a), while the plug 83b is pushed into the push-in opening N, which is offset one position to the right relative to the group of three push-in openings R, S and T, for a neutral rail and the plug 84b is pushed into a push-in opening A, which is in line with the push-in opening of the plug 82b˝, for an auxiliary earth rail. The push-in plugs 87b, 87b′ and 87b˝ and 88b are, respectively, pushed into the push-in openings R, S, T and N of the uppermost row of push-in openings in the output element 3, which are in line with the said push-in openings in the input element 2, into which the plugs 82b, 82b′, 82b˝ and 83b are pushed. The push-in plugs 85b, 85b′, 85b˝ and 86b, which are connected directly to, respectively, plugs 87b, 87b′, 87b˝ and 88b, are pushed into four adjacent openings E which are in line with, respectively, the openings 87b, 87b′, 87b˝ and 88b. A possible use of the connecting elements 80a and 80b in a switch box according to the invention is shown schematically in Fig. 3a. In this application two single-phase elements 80a are fitted to the left of the first broken line in Fig. 3a, the push-in openings occupied by the respective push-in plugs thereof being provided with a x sign. One three-phase element 80b is fitted between the two broken lines, the push-in openings occupied by the push-in plugs again being provided with a x sign. It can be seen that the connecting elements can be plugged in only in the indicated manner. The connecting elements cannot be plugged in upside down and also cannot be offset one position upwards or downwards and to the left or the right.

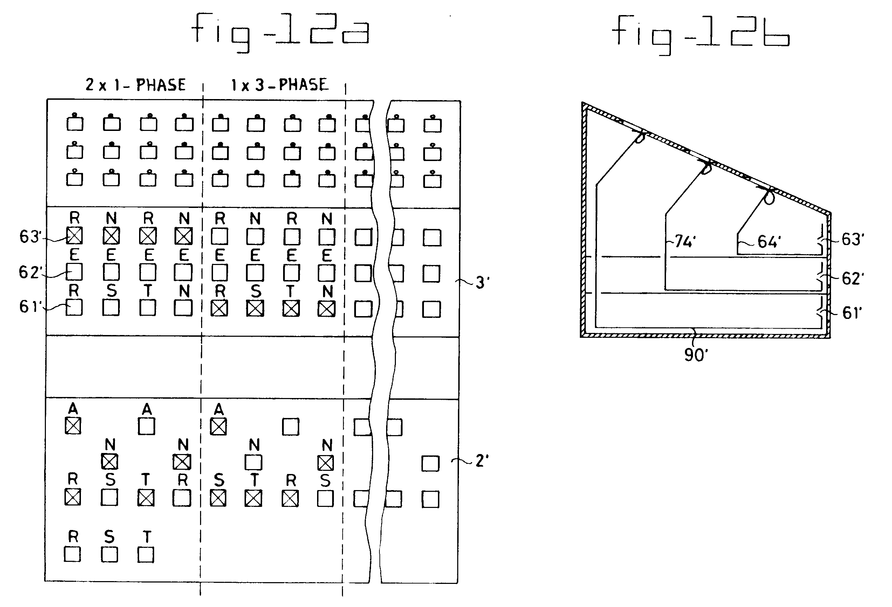

A modified embodiment of a switch box is shown schematically in Figures 12a and 12b. The input element 2′ is identical to the input element 2 of the embodiment according to Fig. 3. The output element 3′, however, is extended relative to the output element 3 by an extra row of compartments with a corresponding row of push-in openings, so that the output element in the front wall thereof possesses three rows of openings 61′, 62′ and 63′ respectively, each belonging to a rail compartment in the same way as described above for the two-row design with the aid of Figs. 6a and 6b. A terminal opening of a through-connection which is located in the relevant compartment and can be of the same shape as described with the aid of Figs. 10a and 10b lies in line with each of the push-in openings 61′, 62′ and 63′. In the schematic transverse section shown in Fig. 12b, the respective through-connection rails, which are shown as U-shaped, are indicated from top to bottom by, respectively, 64′, 74′ and 90′. The embodiment shown makes it possible to carry out single-phase connections separately from three-phase connections. In Fig. 12a, for example, the uppermost row of openings 63′ is used for single-phase connections and the lowermost row of openings 61′ for three-phase connections. With this arrangement use is made, respectively, of connecting elements 91a, shown in Fig. 13a, for single-phase connections and of connecting elements 91b, shown in Fig. 13b, for three-phase connections. The push-in plugs indicated by R, N and A of the element 91a are ordered in the same way as the plugs 82a, 83a and 84a of the connecting element 80a shown in Fig. 11a, while the push-in plugs, indicated by N and R, of the element 91a which correspond to the push-in plugs 87a and 88a of the element 80a shown in Fig. 11a, lie at a vertical distance from the plugs indicated by A, N and R which is the same as the distance that the row of openings 63′ lies away from the openings indicated by A, N and R, S, T respectively in the input element 2′.

The order of the push-in plugs indicated by T, S, R, N and A in the three-phase connecting element 91b shown in Fig. 13b corresponds to that of the plugs 82b, 82b′, 82b˝, 83b and 84b of the connecting element 80b shown in Fig. 11b, while the push-in plugs, indicated by N, T, S and R of the element 91b correspond, in respect of the horizontal order and function, to the push-in plugs N, T, S and R of the element B shown in Fig. 11b. These push-in plugs of the element 91b, however, lie at a smaller vertical distance from the push-in plugs indicated by A, N and T, S, R than the plugs N and R lie away from the plugs, indicated by A, N and R, of the element 91a and specifically at a distance which corresponds to the distance from the row of push-in openings 61′ in the element 3′ to, respectively, the push-in openings A, N and R, S, T in the element 2′. In Fig. 12a, in the same way as described with the aid of Fig. 3a, by way of example the use of two single-phase connecting elements 91a is shown schematically left of the first broken line and the use of one three-phase element 91b is shown schematically between the two broken lines, the push-in openings occupied by the respective push-in plugs being provided with a small x sign. On regarding the situation in Fig. 12a, it can be seen that the possible transposition of the two single-phase elements with one three-phase element will not have any harmful consequences since no connection will take place between the phase rail S and a neutral rail N in the output element 3′, because the phase rails and neutral rails coming into consideration are located in different rows which are separated from one another.

A preferred embodiment of the push-in plugs of the connecting elements is shown in Figures 11c and 11d. As is shown in the side view of a connecting element 80 in Fig. 11c, the push-in plugs 82, 83, 84, 85 and 87 consist of an essentially V-shaped element of resilient, electrically conducting material, the top 100 of which in Fig. 11d is directed outwards and the legs 101 and 102 respectively of which diverge in the direction of the box-shaped housing of the connecting element in such a way that the distance between the legs at some distance away from the front wall of the housing is already greater than the distance between the bent-over edges (35a and 35b in Fig. 9a), which are opposite to one another, of the terminal openings of the conductor rails in which the plugs are intended to be fitted, while the width of the plugs is virtually identical to the distance between the other two edges, which are opposite to one another, of the terminal openings. With this embodiment as large as possible a contact surface is obtained between the terminal openings of the conductor rails and the terminal plugs of the connecting elements, as well as a sufficiently high contact force, as a result of which as small as possible a transfer resistance is obtained. Moreoever, an abrasive and self-cleaning action of the contact surfaces is obtained when inserting the resilient push-in plugs into the terminal openings.

Although the terminal openings and push-in openings have a rectangular shape in the figures described above, it will be clear that these connection and push-in openings can also possess different geometric shapes, for example an oval shape, circular shape, triangular shape etc. The push-in plugs of the connecting elements must then have a shape adapted to this. A combination of different shapes of connection and push-in openings can also be used, which in conjunction with accordingly adapted push-in plugs of the connecting elements offers an extra possibility for preventing incorrect connection of the connecting elements.

The switch box described above can, moreover, be extended with extension boxes of the same construction of modular elements. Depending on the manner in which these extension boxes are connected, the input element of extension boxes of this type may or may not be provided with a current limiting switch.

If the connection to the main current supply line is direct, i.e. upstream of the current limiting switch in the main switch box, the input element of the extension box must be provided with a current limiting switch. However, the connection can also be effected downstream of the current limiting switch in the main switch box, in which case the input element then does not contain a current limiting switch.

The connection of extension boxes of this type is then effected via connection to the terminal openings 37, described above by way of example and shown in Fig. 4, in the phase rails of the input element 2 by employing, for example, connecting bodies 104 (see Fig. 4a), which are provided with push-in plugs 105, 106, 107, 108, 109 and 110 of the same shape and dimensions as the push-in plugs of the connecting elements described above. The plugs 105, 106 and 107 are intended to be pushed into the push-in openings 21 of the supporting wall (see Fig. 4), while the plugs 108, 109 and 110 are then pushed into corresponding push-in openings of a corresponding supporting wall of an adjacent extension box. A similar procedure can be used for connecting up the neutral and earth rails.

In the manner described above it is possible with only a few basic elements (modules) and extension elements to construct a very large number of varied switch boxes or domestic installations and similar installations. The basic elements (input box and output box and extension box) are then fully wired and assembled in the factory. The input box with the current limiting switch then contains the main protection against short circuit currents, while the connecting elements used contain the other protection functions (loss current to earth, overload current). The input elements and output elements require only one safety quality mark and these elements can then be installed by the installer. It is then necessary only for the input element to be connected to the main line by the appropriate authority (power company) while the input lines to the domestic installations can be connected by the installer.

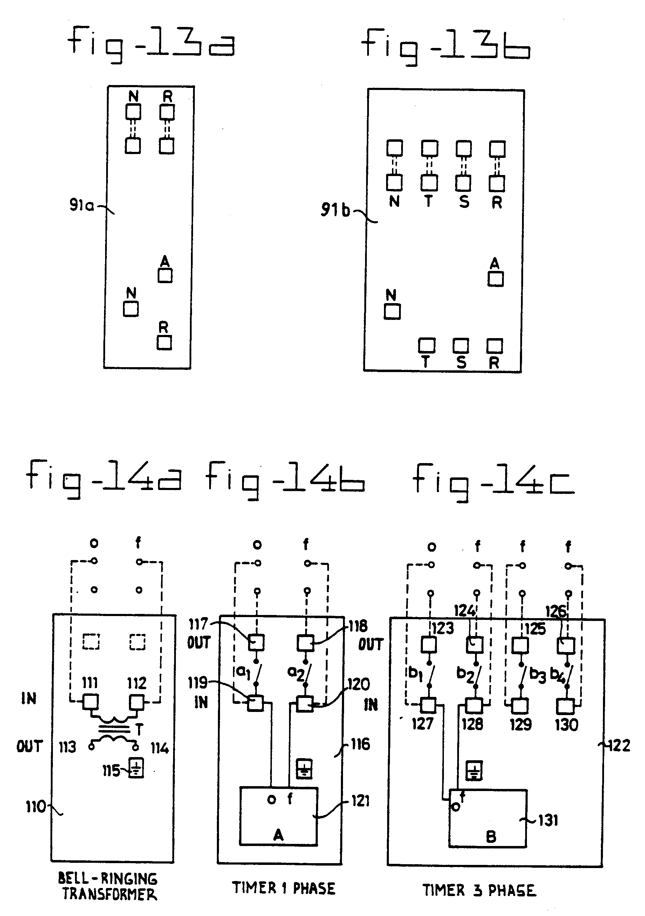

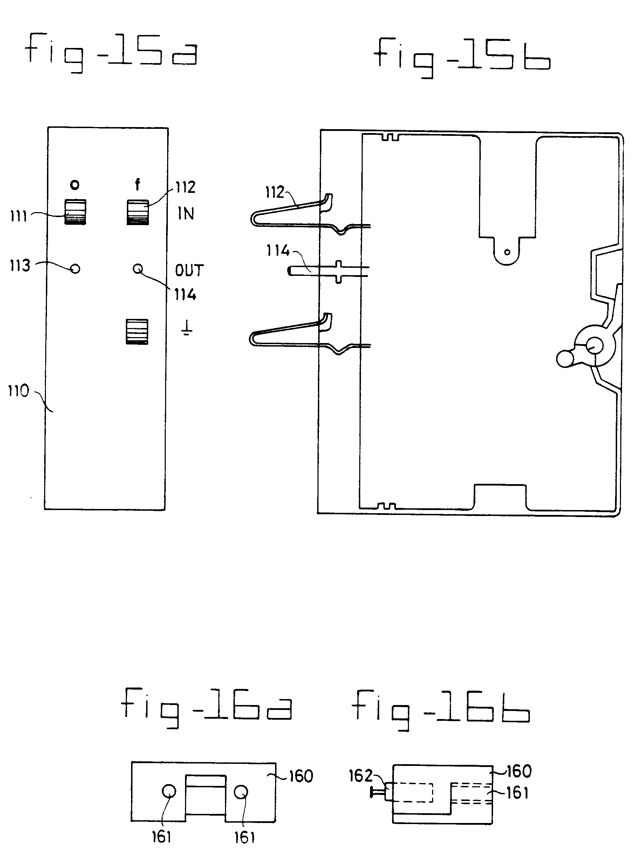

In addition to use as a switch box for domestic installations, the above-described box made of modules can also be used for the connection of secondary installations, in which case, for example, use can then be made of the connections to the described extra rails in the output part 3 and of special connecting elements. Three examples of such connection possibilities are shown in Fig. 14. Fig. 14a shows schematically a connecting element 110 for connecting a transformer (for example a bell-ringing transformer) in a box as shown in Figures 1, 2, 3 and 4. The connecting element is provided with push-in plugs 111 and 112 which in respect of position correspond to the position of the plugs 86a and 85a respectively of the connecting element according to Fig. 11a. The primary winding of a transformer T is placed between the plugs 111 and 112. The secondary winding of the transformer is connected to two push-in type plugs 113 and 114, which are fitted beneath the plugs 111 and 112. The connecting element is also provided with a push-in plug 115 corresponding to the position of the plug 84a of the connecting element 80a according to Fig. 11a. Figures 15a and 15b show, respectively, a front view and a side view of the connecting element according to Fig. 14a.

When fitting the connecting element 110, the plugs 111 and 112 are connected to the connections of the extra rails in the output element 3 via the terminal openings E (see Fig. 3a) while the terminal plug 115 is connected to the earth rail in the input element 2 via a terminal opening A. The extra rails, of which the connections are connected via the terminal openings E to the terminal plugs 111 and 112, are in this case connected up with, respectively, a single-phase rail R(T, S) and a neutral rail N of the input element 2, use preferably being made, for this connecting up, of a connecting element which is used in combination with the connecting element 110 and is provided with a safety switching component (for example a safety switch against loss currents to earth and/or overload currents), as described with the aid of Fig. 11a or Fig. 11b. For this purpose, a through-connection must be made in the output element between the extra rails (terminal openings E in Fig. 3a) to which the two connecting elements respectively are connected. This abovementioned combination offers, inter alia, the advantage that the connecting element provided with the bell-ringing transformer can be fitted and the connection of the bell can be made without current.

According to a possible embodiment, the output plugs 113 and 114 of the connecting element 110 can be pushed into sockets 161 of a small coupling socket block 160 which is shown in Fig. 16 in front view (Fig. 16a) and side view (Fig. 16b) and which is detachably fitted in a communication channel 3a located between the input part 2 and output part (see Fig. 3a). For connection of the weak current lines, laid in the communication channel, to and from the bell, the small coupling socket block is provided with rapid terminals 162, which are known per se.

Connecting elements designed as a timer are shown in Figs. 14b and 14c for, respectively, single-phase and three-phase connection for the control of installations connected to the box. The connecting element 116 shown in Fig. 14b possesses terminal plugs 117, 118, 119 and 120, the position of which corresponds to the position of the terminal plugs 88a, 87a, 86a and 85a respectively of the connecting element 80a in Fig. 11a. A control unit 121 designed as a timer is fitted in the connecting element 116, which unit is connected to the plugs 119 and 120, which are connected as input plugs to, respectively, a neutral rail and a single-phase rail in the output element 3 via push-in openings which are indicated by E in Fig. 3, and which rails are connected up directly or indirectly to a neutral rail and a single-phase rail in the input element, here again use preferably being made of a connecting element of the type shown in Fig. 11a which is used in combination with the connecting element 116 and is provided with a safety switching component.

Furthermore, the plug 119 is connected to the plug 117 via a switch a1 actuated by the control unit and the plug 120 is connected to the plug 118 via a switch a2 actuated by the control unit. The plugs 117 and 118 are connected to the rails in the output element, which in Fig. 3a lie with their terminal openings behind the push-in openings indicated by R (ST) and N in Fig. 3a, into which the said plugs are pushed.

The connecting element 122 shown in Fig. 14c possesses terminal plugs 123, 124, 125, 126 and 127, 128, 129, 130 respectively, which correspond in position with the terminal plugs 88b, 87b˝, 87b′, 87b and 86b, 85b˝, 85b′, 85b respectively of the connecting element 80b in Fig. 11b. This element also contains a control unit 131 which is designed as a timer and is connected to the plugs 127, 128, 129, 130, which are connected as input connections to, respectively, a neutral rail and three-phase rails in the output element 3 via push-in openings which are indicated by E in Fig. 3. The plugs 127, 128, 129 and 130 are connected via switches b1, b2, b3 and b4 respectively, which are actuated by the control unit 131, to the plugs 123, 124, 125 and 126 respectively, which are pushed into push-in openings indicated by N, R, T and S in the output elements 3 in Fig. 3a. The installations to be operated can be connected via the corresponding openings in the top wall of the input part 3 of the switch box. Furthermore, the connecting element 122 shown in Fig. 14a is also preferably used in combination with a connecting element of the type shown in and described with the aid of Fig. 11b.

The connecting elements described with the aid of Fig. 14 can also be designed in a different way, in which case, for example, the connection of the connecting elements 116 and 122 containing the timer is likewise effected via a plug element fitted in the communication channel, the push-in plugs 117, 118 and 123, 124, 125 and 126 then being designed as contact pins and being located beneath the push-in plugs 119, 120 and 127, 128, 129 and 130 respectively.

The connecting elements shown in Fig. 14 give only some examples of application possibilities of the box according to the invention for the connection of secondary electrical installations. Other possibilities can be designed by experts, communication connections, remote controls and digital read-outs for monitoring energy consumption for domestic purposes being conceivable.

It is also pointed out that the invention is not restricted to the embodiments described above with the aid of the figures but also extends to modified embodiments which fall within the scope of the invention as claimed.

Thus, the output element, deviating from the embodiment described above in which the conductor rails are fitted in one box divided into compartments, can be made up of independent compartments which each contain a conductor rail and are detachably attached, for example clamped to one another.

## Claims

1. Switch box for electrical installations, comprising an input element (2), an output element (3) and at least one detachable connecting element (80) for interconnecting the input and output elements (2, 3), characterised in that the switch box is designed in the form of a modular system, comprising a modular input element (2) which can be installed separately and housing a current limiting switch (SBE) and associated electrical wiring, contacts and terminals (40) for the connection, on the one hand, of a main power supply line (41) and, on the other hand, contacts and terminals (23, 25, 27; 35) for connection to corresponding contacts and terminals (82-84) of a detachable modular connecting element (80), and a modular output element (3) which can be installed separately and having contacts and terminals (79; 179) for the connection, on the one hand, of outlet lines (78) to the electrical installation and, on the other hand, contacts and terminals (68, 72; 168, 172) for connection to corresponding contacts and terminals (85-87) of the detachable modular connecting element (80).

2. Switch box according to claim 1, wherein the contacts and terminals of the modular input and output elements (2, 3) on the one hand and the contacts and terminals of the modular connecting elements (80) on the other hand are formed as corresponding push-in plugs and terminal openings for receiving the push-in plugs in a clamping but detachable manner.

3. Switch box according to claim 2, wherein the contacts and terminals of the modular input and output elements (2, 3) are formed by terminal openings (23, 25, 27; 35: 68, 72; 168, 172) which are connected to electrical conductors, while the contacts and terminals of the modular connecting elements (80) are formed as corresponding push-in plugs (82-87).

4. Switch box according to claim 3, wherein said electrical conductors of the modular input and output elements (2, 3) consist of conductor rails (22, 24, 26; 30, 31, 32: 64, 70; 164, 174) each of which being provided with terminal openings (23, 25, 27; 35: 68, 72; 168, 172) for receiving the corresponding push-in plugs (82-87) of the modular connecting elements (80), the terminal openings of the conductor rails being in line with push-in openings (14, 15, 17; 61a-b, 62a-b) in the front wall (8c; 51) of respectively, the modular input element (2) and the modular output element (3), the terminal openings (23, 25, 27; 35: 68, 72; 168, 172) and the push-in openings (14, 15, 17; 61a-b, 62a-b) in line therewith are ordered such that the possibility of inserting push-in plugs of modular connecting elements (80) into non-corresponding terminal openings of the modular input and output elements (2, 3) is prevented.

5. Switch box according to claim 4, wherein the conductor rails of the modular input element (2) comprise an auxiliary rail (22) to be connected to an auxiliary line, a neutral rail (24) to be connected to a neutral line, and a single-phase rail (26) or a three-phase rail (30, 31, 32) to be connected to a current supply line, said rails (22, 24, 26; 30, 31, 32) being fitted beneath one another viewed in the vertical direction of the switch box and each rail (22, 24, 26; 30, 31, 32) being provided with a number of terminal openings (23, 25, 27; 35) having a mutually equal spacing viewed in the horizontal direction of the switch box, which spacings are equal for the auxiliary rail (22), the neutral rail (24) and the single-phase rail (26) and the mutual spacing of the terminal openings (35) of a three-phase rail (30, 31, 32) is twice the spacing of the terminal openings (23, 25, 27) of the auxiliary, neutral or single-phase rails (22, 24, 26), the terminal openings (23, 25, 27; 35) are ordered such that the terminal openings in one rail are off-set in the horizontal direction relative to the terminal openings in the rail below and/or above.

6. Switch box according to claim 5, wherein the uppermost rail is an auxiliary rail (22), the rail beneath is a neutral rail (24) and the lowermost rail is a phase rail (26; 30, 31, 32), the front wall (8c) of the modular input element (2) being provided at the lowermost phase rail (26; 30, 31, 32) with a row of push-in openings (R, S, T) which, viewed in the horizontal direction, are at a mutually equal spacing which is equal to the mutual spacing of the terminal openings (35) of a three-phase rail (30, 31, 32) and being provided at the neutral rail (24) with a row of push-in openings (N) which are at a mutual spacing which is twice the mutual spacing of the push-in openings (R, S, T) at the phase rail (26; 30, 31, 32), and being provided at the auxiliary rail (22) with a row of push-in openings (A) which are at a mutual spacing which is twice the mutual spacing of the push-in openings (R, S, T) at the phase-rail (26; 30, 31, 32), the push-in openings (N) at the neutral rail (24) being off-set viewed in the horizontal direction relative to the push-in openings (A) at the auxiliary rail (22) over a spacing equal to the spacing between the push-in openings (R, S, T) at the phase rail (26; 30, 31, 32), and the push-in openings (A) at the auxiliary rail (22) and the push-in openings (N) at the neutral rail (24) are, viewed in the vertical direction, in line with a push-in opening (R, S, T) at the phase rail (26; 30, 31, 32).

7. Switch box according to claim 6, wherein the phase rail is a single-phase rail (26), the terminal openings (27) of which are arranged to be in line with the terminal openings (23) in the auxiliary rail (22), viewed in the vertical direction.

8. Switch box according to claim 6, wherein the phase rail is a three-phase rail (30, 31, 32) provided with three terminal openings or groups of three terminal openings (35) all terminal openings being at a mutually equal spacing, the first terminal opening (35) of which viewed in the vertical direction, being in line with the first terminal opening (23) of the auxiliary rail (22).

9. Switch box according to claim 8, wherein the three-phase rail is made up of three stripconductor rails (30, 31, 32) which are separated from one another by intermediate insulating partitions (38, 39) and consist of a longitudinal body section (33) and lip-shaped projections (34) which protrude upwards from the body section (33), viewed in the vertical direction, which lip-shaped projections (34) are provided with a terminal opening (35), the lip-shaped projections (34) of the respective conductor rails (30, 31, 32) being off-set relative to one another viewed in the horizontal direction, such that the successive terminal openings (35) of the three-phase rail formed in this manner are at a mutual equal spacing.

10. Switch box according to claim 7 or 9, wherein the phase conductor rails (26; 30, 31, 32) each posses at the respective ends, lip-shaped projections (28; 36) which protrude downwards from the body section viewed in the vertical direction, said down-wards projecting lip-shaped projections (28; 36) are provided with a terminal opening (29; 37) which being in line with push-in openings (R, S, T) made in the frontwall (8c) of the input element (2) for receiving push-in plugs of a connecting body to be inserted for connecting the modular input element (2) of the switch box to a further modular input element (2) of an extension switch box to be positioned alongside.

11. Switch box according to any one of the claims 5 to 10, wherein the conductor rails (22, 24, 26; 30, 31, 32) of the modular input element (2) are accommodated in a rail container (7), which rail container (7) is subdivided into compartments (9-11) which extend over the width of the container (7) and are separated from one another viewed in the vertical direction, in which compartments (9-11), the auxiliary rail (22), the neutral rail (24) and the phase rail or phase rails (26; 30, 31, 32) respectively, are accommodated.

12. Switch box according to any one of the preceding claims, wherein the modular input element (2) is made up of the following three parts:
a. a container-shaped main section (6) for accommodating therein a current limiting switch with the associated wiring and circuit components,
b. a container-shaped rail section (7) which is positioned inside the main section (6) and serves to accommodate therein the conductor rails (22, 24, 26; 30, 31, 32) the internal space of this container section (7) being separated by a partition (7c) from the main section (6), the rail section (7) being attached by hinges (7') to a side wall (6a) of the main section (6), and
c. a container-shaped cover section (8) intended to be fitted to cover the main section (6) and the rail section (7) positioned therein, the cover section (8) having a side wall (8b) which is attached by hinges (8') to a side wall (6b) of the main section (6), which side wall (6b) is opposite the side wall (6a) of the main section (6) to which the rail container section (7) is hingedly attached, the cover section (8) being provided with push-in openings (A, N, R, S, T) which are in line with the terminal openings (23, 25, 27, 29; 35, 37) of the conductor rails (22, 24, 26; 30, 31, 32).

13. Switch box according to claim 12, wherein the main section (6), the rail section (7) and the cover section (8) including the hinging fixings (7', 8') are produced in one piece from plastic material by injection moulding.

14. Switch box according to any one of the preceding claims, wherein the modular output element (3) is provided with at least neutral and phase rails (64; 164), each rail being provided with a terminal opening (68; 168), for plugging in a corresponding contact (87, 88) of the modular connecting element (80), and a contact (79; 179) for connecting, respectively, a neutral and phase lead (78) of an outgoing supply line to the electrical installation.

15. Switch box according to claim 14, wherein the neutral and phase rails (64; 164) are positioned adjacent to one another in the horizontal direction in a compartment (62), which compartment (62) is provided in its front wall (51) with push-in openings (62a, 62b) which are in line with the terminal openings (68; 168) of the neutral and phase rails (64; 164) for receiving the contacts (87, 88) of the modular connecting elements (80), the terminal openings (68; 168) of the neutral and phase rails (64; 164) and the corresponding push-in openings (62a, 62b) in the front wall (51) of the compartment (62) having a mutual spacing which is equal to the mutual spacing of the terminal openings (23, 25, 27; 35) of the neutral and phase rails (22, 24, 26; 30-33) of the modular input element (2).

16. Switch box according to claim 15, wherein the modular output element (3) is provided with an extra set of conductor rails (70; 174) separated from the neutral and phase rails (64; 164) said extra conductor rails (70; 174) having on one side terminal openings (72; 172) positioned above or below the terminal openings (68; 168) of the neutral and phase rails (64; 164) and in line with push-in openings (61a, 61b) in the front wall (51) of the modular output element (3), and having on the other side contacts for lines to be connected to secondary installations.

17. Switch box according to claim 16, wherein the terminal openings (68; 168) of the neutral and phase rails (64; 164) are ordered in a horizontal row and when using a single-phase connection the neutral and phase rails (64; 164) are mounted alternately in this row, while when using a three-phase connection three separate phase rails and one neutral rail are mounted alternately in one row.

18. Switch box according to claim 16, wherein three row's of push-in openings (61', 62', 63') underneath one another and positioned in separate compartments are provided in the front wall of the modular output element (3'), one row of push-in openings (63') being intended for single-phase connections, such that a neutral and phase rail (64') are mounted alternately in the respective compartment; one row of push-in openings (61') being intended for a three-phase connection such that alternately in three corresponding adjacent compartments one phase rail (90') is mounted and a neutral rail (90') is fitted in the following compartment, while the third row of push-in openings (62') belongs to the compartments in which extra conductor rails (74') are mounted.

19. Switch box according to any one of the claims 14 to 18, wherein the rails (64, 70; 164, 174; 64', 74', 90') in the modular output element (3; 3') are essentially U-shaped, one leg (65, 71) of which being positioned against or at a short distance from the front wall (51) of the box-shaped housing (50) of the modular output element (3) and being provided with a terminal opening (68, 72) in line with a push-in opening (61a, 61b, 62a, 62b) in the front wall (51), and the top (67c, 74c) of the other leg (67, 74) lying against the top wall (54) of the housing (50) at a position which adjoins a terminal opening (62aa, 62bb, 63a, 63b), and when viewed in the vertical direction the transverse section (73a) of the U-shaped rails (70) located beneath is greater than the transverse section (66) of the U-shaped rails (64) located above, and wherein the top (74c) of the U-shaped rails (70) located beneath is further away from the front wall (51) of the housing (50) than the top (67c) of the U-shaped rails (64) located above.

20. Switch box according to any one of the claims 14 to 19, wherein the modular output element (3) consists of a box-shaped housing (50) which is subdivided by horizontal partitions (55, 56) and vertical partitions (60) into separate compartments for accommodating a conductor rail (64, 70; 64', 74', 90'; 164, 174) therein.

21. Switch box according to any one of the claims 14 to 19, wherein the modular output element (3) is made up of compartments which are detachably attached to one another and contain at least one conductor rail (64, 70; 64', 74', 90'; 164, 174)

22. Switch box according to claim 10, wherein at least one extension switch box is positioned alongside, said extension switch box comprising a modular input element (2) and a modular output element (3), the modular input element (2) having at least an auxiliary rail (22), a neutral rail (24) and a single-phase rail (26) or a three-phase rail (30, 31, 32), the modular input elements (2) of the switch boxes are electrically connected by means of a connecting body (104) inserted in respective terminal openings (29; 37) of the rails (26; 30, 31, 32).

23. Switch box according to claim 22, wherein a current limiting switch is likewise accommodated in de the modular input element (2) of the extension switch box.

24. Switch box for use as an extension switch box according to claim 22 or 23, comprising a modular input element (2), a modular output element (3) and at least one modular connecting element (80).

25. Switch box according to any one of the preceding claims, comprising a channel-shaped recess (3a) for installing therein extra signal lines, neutral lines, auxiliary earth lines and the like.

26. Switch box according to claim 25, wherein the modular input element (2) and the modular output element (3) are mounted at a lower case (1), the channel-shaped recess being formed in that the modular input element (2) and the modular output element (3) are mounted at a distance from one another, viewed in the vertical direction.

27. Modular connecting element comprising electrical circuits (S; T; 121; 131) and contacts and terminals (82-87) for connection to corresponding contacts and terminals (23, 25, 27; 35; 68, 72; 168, 172) of modular input and output elements (2, 3) of a switch box, the modular connecting element (80) having means to provide a predetermined interconnection of the modular input and output elements (2, 3) by a correct positioning of the modular connecting element (80) on the input and output elements (2, 3).

28. Modular connecting element according to claim 27, wherein the contacts and terminals (82-87) are arranged to provide the predetermined interconnecting of the modular input and output elements (2, 3) of the switch box.

29. Modular connecting element according to claim 28, wherein the contacts and terminals (82-87) consist of push-in plugs for detachably connecting to corresponding terminal openings (23, 25, 27; 35; 68, 172; 168, 172) of the modular input and output elements (2, 3) of the switch box.

30. Modular connecting element according to claim 28, wherein the push-in plugs (82-87) are ordered such that when the modular connecting element (80) is fitted on the modular input and output elements (2, 3) of the switch box a set of the push-in plugs (82, 83, 84) is connected to a terminal opening (23) of an auxiliary rail (22), a terminal opening (25) of a neutral rail (24) and a terminal opening (27) of one single-phase rail (26) or three successive openings (35) of a three-phase rail (30, 31, 32) of the modular input element (2) and another set of push-in plugs (85-87) is connected to terminal openings (68, 72; 168, 172) of a group of neutral and phase rails (64; 164) which belong together and, if appropriate, of extra conductor rails (70; 174) through terminal openings (72; 172) of the modular output element (3).

31. Modular connecting element according to claim 29 or 30, wherein the push-in plugs (82-87) of the modular connecting element (80) are designed as essentially V-shaped elements (100) of resilient electrically conducting material, which V-shaped elements (100) are directed with its top to the outside and the legs (101, 102) of which diverge towards the modular connecting element (80).

32. Modular connecting element according to claim 30, wherein the electrical circuits comprise switching means (S), and the push-in plugs (88a; 88b) intended to be pushed into the terminal openings (68; 168) of the neutral rail in the modular output element (3) of the switch box is connected to the push-in plugs (86a, 86b) to be pushed into the terminal openings (72; 172) of the extra rail (70; 174) in the modular output element (3), where as the push-in plug or push-in plugs (87a; 87b, 87b', 87b'') to be pushed into the terminal openings (68; 168) of the phase rail or phase rails (64; 164) in the modular output element (3) are connected to the push-in plugs (85a; 85b, 85b', 85b'') to be pushed into the terminal openings (72; 172) of the extra rail or extra rails (70; 174) in the modular output element (3).

33. Modular connecting element according to any one of the claims 27 to 31, wherein the electrical circuits comprise an auxiliary switch protecting against earth fault currents and/or overload currents.

34. Modular connecting element according to any one of the claims 27 to 30, wherein the electrical circuits comprise a bell-ringing transformer (T).

35. Modular connecting element according to any one of the claims 27 to 30, wherein the electrical circuits comprise time-switch means (121; 131).

36. Modular connecting element according to any one of the claims 27 to 35, wherein the contacts and terminals (82-87) are provided on a base element, and the electrical circuits (S; T; 121; 131) are designed as detachable separate units for mounting on said base element.

37. Modular connecting element according to claim 36, wherein the base element and one or more of said separate circuit units form an integral box-shaped element.

## Patentansprüche

1. Schaltschrank für elektrische Anlagen, mit einem Eingangselement (2), einem Ausgangselement (3) und wenigstens einem abnehmbaren Verbindungselement (80) zur Verbindung der Eingangs- und Ausgangselemente (2, 3),
dadurch gekennzeichnet, daß der Schaltschrank in der Form eines modularen Systems konstruiert ist und ein modulares Eingangselement (2) aufweist, welches getrennt bzw. unabhängig installiert werden kann und welches einen strombegrenzenden Schalter (S B E) und zugeordnete elektrische Verdrahtung, Kontakte und Anschlüsse (40) einerseits für eine Verbindung mit einer Hauptstromversorgungsleitung (41) aufnimmt und andererseits Kontakte und Anschlüsse (23, 25, 27; 35) aufnimmt, füreine Verbindung mit entsprechenden Kontakten und Anschlüssen (82-84) eines abnehmbaren modularen Verbindungselements (80) , und ein modulares Ausgangselement (3) aufweist, welches getrennt bzw. unabhängig installiert werden kann und welches Kontakte und Anschlüsse (79; 179) einerseits für eine Verbindung von Ausgangsleitungen (78) mit der elektrischen Anlage und andererseits Kontakte und Anschlüsse (68, 72; 168, 172) aufnimmt für eine Verbindung mit entsprechenden Kontakten und Anschlüssen (85-87) des abnehmbaren modularen Verbindungselements (80).

2. Schaltschrank nach Anspruch 1, bei dem die Kontakte und Anschlüsse der modularen Eingangs- und Ausgangselemente (2, 3) einerseits und die Kontakte und Anschlüsse des modularen Verbindungselements (80) andererseits als entsprechende Einschubstecker und Anschlußöffnungen für die Aufnahme der Einschubstecker nach Art eines Festklemmens, jedoch abnehmbar ausgebildet sind.

3. Schaltschrank nach Anspruch 2, bei dem die Kontakte und Anschlüsse der modularen Eingangs- und Ausgangselemente (2, 3) durch Anschlußöffnungen (23, 25, 27; 35: 68, 72; 168, 172) gebildet sind, die mit elektrischen Leitern verbunden sind, während die Kontakte und Anschlüsse der modularen Verbindungselemente (80) als entsprechende Einschubstecker (82-87) ausgebildet sind.

4. Schaltschrank nach Anspruch 3, bei dem die elektrischen Leiter und die modularen Eingangs- und Ausgangselemente (2, 3) aus Kontaktschienen (22, 24, 26: 30, 31, 32: 64, 70; 164, 174) bestehen, von denen jede mit Anschlußöffnungen (23, 25, 27: 35: 68, 72, 168, 172) für die Aufnahme entsprechender Einschubstecker (82-87) der modularen Verbindungselemente (80) ausgestattet ist, wobei die Anschlußöffnungen der Leiterschienen in einer Linie liegen mit bzw. ausgerichtet sind mit Einschuböffnungen (14, 15, 17; 61a-b, 62a-b) in der Frontwand (8c; 51) von jeweils dem modularen Eingangselement (2) und dem modularen Ausgangselement (3) wobei die Anschlußöffnungen (23, 25, 27; 35: 68, 72; 168, 172) und die Einschuböffnungen (14, 15, 17; 61a-b, 62a-b), die damit ausgerichtet sind, so in einer Reihenfolge angeordnet sind oder orientiert sind, daß die Möglichkeit des Einführens von Einschubsteckern der modularen Verbindungselemente (80) in nicht entsprechende Anschlußöffnungen der modularen Eingangs- und Ausgangselemente (2, 3) verhindert ist.

5. Schaltschrank nach Anspruch 4, bei dem die Leiterschienen des modularen Eingangselements (2) eine Hilfsschiene (22) aufweisen, die an eine Hilfsleitung anzuschließen ist, ferner eine neutrale Schiene (24) aufweisen, die an eine neutrale Leitung anzuschließen ist, ferner eine Einzelphasenschiene (26) oder eine 3-Phasen-Schiene (30, 31 32) aufweisen, die an eine Stromversorgungsleitung anzuschließen ist, wobei die Schienen (22, 24, 26; 30, 31, 32) untereinander befestigt sind und zwar gesehen in vertikaler Richtung in Bezug auf den Schaltschrank und wobei jede Schiene (22, 24, 26; 30, 31, 32) mit einer Anzahl von Anschlußöffnungen (23, 25, 27; 35) ausgestattet ist, die gegenseitig gleichen Abstand haben und zwar gesehen in horizontaler Richtung des Schaltschrankes, wobei diese Abstände gleich sind für die Hilfsschiene (22), die neutrale Schiene (24) und die Einzelphasenschiene (26) und wobei der gegenseitige Abstand der Anschlußöffnungen (35) der 3-Phasen-Schiene (30, 31, 32) das Zweifache des Abstands der Anschlußöffnungen (23, 25, 27) der Hilfsschiene, neutralen Schiene oder Einzelphasenschiene (22, 24, 26) beträgt und wobei die Anschlußöffnungen (23, 25, 27; 35) in einer solchen Reihenfolge angeordnet sind, daß die Anschlußöffnungen in einer Schiene in horizontaler Richtung relativ zu den Anschlußöffnungen in der darunterliegenden und/oder darüberliegenden Schiene versetzt sind.

6. Schaltschrank nach Anspruch 5, bei dem die oberste Schiene aus einer Hilfsschiene (22) besteht, die darunterliegende Schiene aus einer neutralen Schiene (24) besteht und die unterste Schiene aus einer Phasenschiene (26; 30, 31, 32) besteht, wobei die Frontwand (8c) des modularen Eingangselements (2) an der untersten Phasenschiene (26; 30, 31, 32) mit einer Reihe von Einschuböffnungen (R, S, T) versehen ist, die, gesehen in horizontaler Richtung, im gegenseitigen gleichen Abstand angeordnet sind, der gleich ist dem gegenseitigen Abstand der Anschlußöffnungen (35) der 3-Phasen-Schiene (30, 31, 32) und wobei an der neutralen Schiene (24) eine Reihe von Einschuböffnungen (N) vorgesehen ist, die einen gegenseitigen Abstand haben, der das Zweifache des gegenseitigen Abstands der Einschuböffnungen (R, S, T) an der Phasenschiene (26: 30, 31, 32) beträgt und wobei an der Hilfsschiene (22) eine Reihe von Einschuböffnungen (A) ausgebildet ist, die einen gegenseitigen Abstand haben, der das Zweifache des gegenseitigen Abstands der Einschuböffnungen (R, S, T) an der Phasenschiene (26; 30, 31, 32) beträgt. wobei die Einschuböffnungen (N) an der neutralen Schiene (24), gesehen in horizontaler Richtung, relativ zu den Einschuböffnungen (A) an der Hilfsschiene (22) um einen Abstand versetzt sind, der gleich ist dem Abstand zwischen den Einschuböffnungen (R, S, T) an der Phasenschiene (26; 30, 31, 32), und wobei die Einschuböffnungen (A) an der Hilfsschiene (22) und die Einschuböffnungen (N) an der neutralen Schiene (24), gesehen in vertikaler Richtung, auf einer Linie bzw. ausgerichtet sind mit einer Einschuböffnung (R, S, T) an der Phasenschiene (26; 30, 31, 32).

7. Schaltschrank nach Anspruch 6, bei dem die Phasenschiene aus einer Einzelphasenschiene (26) besteht, deren Anschlußöffnungen (27) so angeordnet sind, daß sie in einer Linie bzw. ausgerichtet sind mit den Anschlußöffnungen (23) in der Hilfsschiene (22), und zwar gesehen in vertikaler Richtung.

8. Schaltschrank nach Anspruch 6, bei dem die Phasenschiene aus einer 3-Phasen-Schiene (30, 31, 32) besteht, welche mit drei Anschlußöffnungen oder Gruppen von drei Anschlußöffnungen (35) versehen ist, wobei alle Anschlußöffnungen einen gegenseitigen gleich großen Abstand aufweisen, wobei die erste Anschlußöffnung (35), gesehen in vertikaler Richtung, auf einer Linie liegt bzw. ausgerichtet ist mit der ersten Anschlußöffnung (23) der Hilfsschiene (22).

9. Schaltschrank nach Anspruch 8, bei dem die 3-Phasen-Schiene aus drei Streifenleiter-Schienen (30, 31, 32) hergestellt ist, die voneinander durch dazwischen angeordnete isolierende Zwischenwände (38, 39) getrennt sind und aus einem länglichen Körperabschnitt (33) und lippenförmig gestalteten Vorsprüngen (34) bestehen, die von dem Körperabschnitt (33), gesehen in vertikaler Richtung, nach oben vorspringen, wobei die lippenförmig gestalteten Vorsprünge (34) mit einer Anschlußöffnung (35) versehen sind und wobei die lippenförmig gestalteten Vorsprünge (34) der jeweiligen Leiterschiene (30, 31, 32) relativ zueinander gesehen in horizontaler Richtung versetzt angeordnet sind derart, daß aufeinanderfolgende Anschlußöffnungen (35) der auf diese Weise ausgebildeten 3-Phasen-Schiene an einem gegenseitigen bzw. wechselseitigen gleichen Abstand gelegen sind.

10. Schaltschrank nach Anspruch 7 oder 9, bei dem die Phasenleiterschienen (26; 30, 31, 32) je an den entsprechenden Enden lippenförmig gestaltete Vorsprünge (28; 36) besitzen, die von dem Körperabschnitt, gesehen in vertikaler Richtung nach unten vorspringen, wobei die nach unten vorspringenden lippenförmig gestalteten Vorsprünge (28; 36) mit einer Anschlußöffnung (29; 37) versehen sind, die in einer Linie bzw. ausgerichtet ist mit Einschuböffnungen (R, S, T), die in der Frontwand (8c) des Eingangselements (2) ausgebildet sind, um Einschubstecker eines einzuschiebenden Anschlußkörpers aufzunehmen, um das modulare Eingangselement (2) des Schaltschranks mit einem weiteren modularen Eingangselement (2) eines längsseits anzuordnenden Erweiterungschaltschrankes zu verbinden.

11. Schaltschrank nach einem der Ansprüche 5 bis 10, bei dem die Leiterschienen (22, 24, 26; 30, 31, 32) des modularen Eingangselements (2) in einem Schienenbehälter (7) aufgenommen sind, wobei der Schienenbehälter (7) in Raumabschnitte (9-11) unterteilt ist, die sich über die Weite oder Breite des Behälters (7) erstrecken und voneinander, gesehen in vertikaler Richtung, getrennt sind, wobei in diesen Raumabschnitten (9-11) die Hilfsschiene (22), die neutrale Schiene (24) und die Phasenschiene oder Phasenschienen (26; 30, 31, 32) jeweils aufgenommen sind.

12. Schaltschrank nach einem der vorhergehenden Ansprüche, bei dem das modulare Eingangselement (2) aus den folgenden drei Teilen hergestellt ist:
a) einem behälterförmigen Hauptabschnitt (6) für die Aufnahme eines strombegrenzenden Schalters mit der zugeordneten Verdrahtung und den zugeordneten Schaltungskomponenten,
b) einem behälterförmigen Schienenabschnitt (7), der innerhalb des Hauptabschnitts (6) angeordnet ist und dazu dient die Leiterschienen (22, 24, 26; 30, 31, 32) aufzunehmen, wobei der Innenraum dieses Behälterabschnitts (7) durch eine Zwischenwand (7c) von dem Hauptabschnitt (6) abgetrennt ist und wobei der Schienenabschnitt (7) mit Hilfe von Scharnieren oder Gelenken (7') an einer Seitenwand (6a) des Hauptabschnitts (6) befestigt ist, und
c) einem behälterförmigen Abdeckabschnitt (8) der so aufgesetzt wird, daß der Hauptabschnitt (6) und der Schienenabschnitt (7), der darin enthalten ist, abgedeckt werden, wobei der Abdeckungsabschnitt (8) eine Seitenwand (8b) besitzt, die über Gelenke oder Scharniere (8') an einer Seitenwand (6b) des Hauptabschnitts (6) befestigt ist, wobei diese Seitenwand (6b) gegenüber der Seitenwand (6a) des Hauptabschnitts (6) gelegen ist, an den der Schienenbehälterabschnitt (7) angelenkt ist, wobei der Abdeckabschnitt (8) mit Einschuböffnungen (A, N, R, S, T) versehen ist, die auf einer Linie liegen mit bzw. ausgerichtet sind mit Auschlußöffnungen (23, 25, 27, 29; 35, 37) der Leiterschienen (22, 24, 26; 30, 31, 32).

13. Schaltschrank nach Anspruch 12, bei dem der Hauptabschnitt (6), der Schienenabschnitt (7) und der Abdeckahschnitt (8), welche die Scharnier- oder Gelenkbefestigungseinrichtungen (7', 8') aufweisen, einstückig aus einem Kunststoffmaterial durch Spritzguß hergestellt sind.

14. Schaltschrank nach einem der vorhergehenden Ansprüche, bei dem das modulare Ausgangselement (3) mit wenigstens einer neutralen Schiene und mit Phasenschienen (64; 164) ausgestattet ist, wobei jede Schiene mit einer Anschlußöffnung (68; 168) versehen ist, um einen entsprechenden Kontakt (87, 88) des modularen Verbindungselements (80) und einen Kontakt (79; 179) einzustecken, um jeweils eine neutrale Leitung und Phasenleitung (78) einer herausverlaufenden Versorgungsleitung zu der elektrischen Anlage anzuschließen.

15. Schaltschrank nach Anspruch 14, bei dem die neutrale Schiene und Phasenschiene (64; 164) nebeneinander in horizontaler Richtung in einem Raumabschnitt (62) angeordnet sind, wobei der Raumabschnitt (62) an seiner Frontwand (51) mit Einschuböffnungen (62a, 62b) ausgestattet ist, die in einer Linie mit bzw. ausgerichtet sind mit den Anschlußöffnungen (68; 168) der neutralen und Phasenschienen (64; 164), um Kontakte (87 und 88) der modularen Verbindungselemente (80) aufzunehmen, wobei die Anschlußöffnungen (68; 168) der neutralen und der Phasenschiene (64; 164) und die entsprechenden Einschuböffnungen (62a, 62b) in der Frontwand (51) des Raumabschnitts (62) einen wechselseitigen bzw. gegenseitigen Abstand haben, der gleich ist dem gegenseitigen Abstand der Anschlußöffnungen (23, 25, 27; 35) der neutralen und Phasenschienen (22, 24, 26; 30-33) des modularen Eingangselements (2).

16. Schaltschrank nach Anspruch 15, bei dem das modulare Ausgangselement (3) mit einem extra Satz von Leiterschienen (70; 174) versehen ist, die von den neutralen- und Phasenschienen (64; 164) getrennt sind, wobei die extra Leiterschienen (70; 174) auf einer Seite Anschlußöffnungen (72; 172) aufweisen, die über oder unterhalb der Anschlußöffnungen (68; 168) der neutralen- und Phasenschienen (64; 164) gelegen sind und die in einer Linie mit bzw. ausgerichtet sind mit Einschuhöffnungen (61a, 61b) in der Frontwand (51) des modularen Ausgangselements (3), und die auf der anderen Seite Kontakte für Leitungen haben, die mit sekundären Anlagen zu verbinden sind.

17. Schaltschrank nach Anspruch 16, bei dem die Anschlußöffnungen (68; 168) der neutralen und Phasenschienen (64; 164) in einer horizontalen Reihe angeordnet sind, wobei bei Verwendung einer Einzelphasenverbindung die neutrale Schiene und die Phasenschiene (64; 164) abwechselnd in dieser Reihe montiert sind, während bei Verwendung einer 3-Phasenverbindung drei getrennte Phasenschienen und eine neutrale Schiene abwechselnd in einer Reihe montiert sind.

18. Schaltschrank nach Anspruch 16, bei den, drei Reihen der Einschuböffnungen (61', 62', 63') die untereinander angeordnet sind und die in getrennten Raumabschnitten gelegen sind, in der Frontwand des modularen Ausgangselements (3') vorgesehen sind, wobei eine Reihe der Einschuböffnungen (63') für Einzelphasenverbindungen vorgesehen ist, derart, daß eine neutrale Schiene und eine Phasenschiene (64') abwechselnd in dem betreffenden Raumabschnitt montiert sind: eine Reihe der Einschuböffnungen (61') für eine 3-Phasenverbindung dient, derart, daß abwechselnd in drei entsprechenden benachbarten Raumabschnitten eine Phasenschiene (90') montiert ist und eine neutrale Schiene (90') in den folgenden oder nachfolgenden Raumabschnitt eingesetzt ist, während die dritte Reihe der Einschuböffnungen (62') den Raumabschnitten zugeordnet ist, in denen extra Leiterschienen (74') montiert sind.

19. Schaltschrank nach einem der Ansprüche 14 bis 18, bei dem die Schienen (64, 70; 164, 174; 64', 74', 90') in dem modularen Ausgangselement (3; 3') im wesentlichen U-förmig gestaltet sind, wobei ein Bein (65, 71) davon gegen die Frontwand (51) des kastenförmigen Gehäuses (50) des modularen Ausgangselements (3) anliegt oder ansteht oder einen kurzen Abstand von dieser Wand hat und mit einer Anschlußöffnung (68, 72) ausgestattet ist, die auf einer Linie liegt mit bzw. ausgerichtet ist mit einer Einschuböffnung (61a, 61b, 62a, 62b) in der Frontwand (51), und wobei der obere Abschnitt (67c, 74c) des anderen Beins (67, 74) gegen die Deckenwand (54) des Gehäuses (50) ansteht an einer Stelle, die sich an eine Anschlußöffnung (62aa, 62bb, 63a, 63b) anschließt, wobei dann, wenn in vertikaler Richtung gesehen wird, der quer verlaufende Schnitt (73a) der U-förmigen Schienen (70), welcher darunter gelegen ist, bzw. darunter verläuft, größer ist als der quer verlaufende Schnitt (66) der U-förmigen Schienen (64), der darüber gelegen ist und wobei der obere Endbereich (74c) der U-förmigen Schienen (70), welcher darunter gelegen ist, weiter abliegt von der Frontwand (51) des Gehäuses (50) als der obere Abschnitt (67c) der U-förmigen Schienen (64), der darüber gelegen ist.

20. Schaltschrank nach einem der Ansprüche 14 bis 19, bei dem das modulare Ausgangselement (3) aus einem kastenförmigen Gehäuse (50) besteht, welches durch horizontale Zwischenwände (55, 56) und durch vertikale Zwischenwände (60) in getrennte Raumabschnitte unterteilt ist, um eine Leiterschiene (64, 70; 64', 74', 90': 164, 174) darin aufzunehmen.

21. Schaltschrank nach einem der Ansprüche 14 bis 19, bei dem das modulare Ausgangselement (3) aus Raumabschnitten besteht, die abnehmbar aneinander befestigt sind und die wenigstens eine Leiterschiene (64, 70; 64', 74', 90'; 164, 174) enthalten.

22. Schaltschrank nach Anspruch 10, bei dem wenigstens ein Erweiterungsschaltschrank längsseits angeordnet ist, wobei der Erweiterungsschaltschrank ein modulares Eingangselement (2) und ein modulares Ausgangselement (3) aufweist, wobei das modulare Eingangselement (2) wenigstens eine Hilfsschiene (22), eine neutrale Schiene (24) und eine Einzelphasenschiene (26) oder eine 3-Phasen-Schiene (30, 31, 32) aufweist und wobei die modularen Eingangselemente (2) der Schaltschränke elektrisch mit Hilfe eines Verbindungskörpers (104) verbunden sind, der in jeweilige Abschlußöffnungen (29; 37) der Schienen (26; 30, 31, 32) eingeschoben ist.

23. Schaltschrank nach Anspruch 22, bei dem ein strombegrenzender Schalter in ähnlicher Weise in dem modularen Eingangselement (2) des Erweiterungsschaltschrankes aufgenommen ist.

24. Schaltschrank zur Verwendung als ein Erweiterungsschaltschrank nach Anspruch 22 oder 23, welcher aufweist ein modulares Eingangselement (2), ein modulares Ausgangselement (3) und wenigstens ein modulares Verbindungselement (80).

25. Schaltschrank nach einem der vorhergehenden Ansprüche, welcher aufweist eine kanalförmig gestaltete Ausnehmung (3a), um in dieser Extrasignalleitungen, neutrale Leitungen, Hilfserdleitungen u. ä, zu installieren.

26. Schaltschrank nach Anspruch 25, bei dem das modulare Eingangselement (2) und das modulare Ausgangselement (3) in einem unteren Gehäuse (1) montiert sind, wobei die kanalförmig gestaltete Ausnehmung dadurch ausgebildet ist, daß das modulare Eingangselement (2) und das modulare Ausgangselement (3) in einem Abstand voneinander, gesehen in vertikaler Richtung, montiert sind.

27. Modulares Verbindungselement, welches elektrische Schaltungen (S; T; 121; 131), Kontakte und Anschlüsse (82-87) enthält für einen Anschluß mit entsprechenden Kontakten und Anschlüssen (23, 25, 27; 35; 68, 71; 168, 172) von modularen Eingangs- und Ausgangselementen (2, 3) eines Schaltkastens oder Schaltschranks, wobei das modulare Verbindungselement (80) Mittel aufweist, um eine vorbestimmte Verbindung der modularen Eingangs- und Ausgangselemente (2, 3) durch eine korrekte Positionierung des modularen Verbindungselements (80) an den Eingangs- und Ausgangselementen (2, 3) vorzusehen.

28. Modulares Verbindungselement nach Anspruch 27, bei dem die Kontakte und Anschlüsse (82-87) so angeordnet sind, um die vorbestimmte Verbindung der modularen Eingangs- und Ausgangselemente (2, 3) des Schaltschranks vorzusehen.

29. Modulares Verbindungselement nach Anspruch 28, bei dem die Kontakte und Anschlüsse (82-87) aus Einschubsteckern bestehen, um eine trennbare bzw. lösbare Verbindung mit entsprechenden Anschlußöffnungen (23, 25, 27; 35; 68, 72; 168, 172) der modularen Eingangs- und Ausgangselemente (2, 3) des Schaltschrankes vorzusehen.

30. Modulares Verbindungselement nach Anspruch 28, bei dem die Einschubstecker (82-87) so angeordnet bzw. in eine Reihenfolge gebracht sind, daß dann, wenn das modulare Verbindungselement (80) an den modularen Eingangs- und Ausgangselementen (2, 3) des Schaltschrankes befestigt wird, ein Satz von Einschubsteckern (82, 83, 84) mit einer Anschlußöffnung (23) einer Hilfsschiene (22), einer Anschlußöffnung (25) einer neutralen Schiene (24) und einer Anschlußöffnung (27) einer Einzelphasenschiene (26) oder drei aufeinanderfolgenden Öffnungen (35) einer 3-Phasen-Schiene (30, 31, 32) des modularen Eingangselements (2) verbunden wird und ein anderer bzw. weiterer Satz von Einschubsteckern (85-87) mit Anschlußöffnungen (68, 72; 168, 172) einer Gruppe von neutralen und Phasenschienen (64; 164) verbunden wird, die zusammengehören und ggf. von extra Leiterschienen (70; 174) über Anschlußöffnungen (72; 172) des modularen Ausgangselements (3) verbunden werden.

31. Modulares Verbindungselement nach Anspruch 29 oder 30, bei dem die Einschubstecker (82-87) des modularen Verbindungselements (80) so konstruiert sind, daß sie aus im wesentlichen V-förmig gestalteten Elementen (100) aus einem nachgiebigen elektrisch leitenden Material bestehen, wobei die V-förmig gestalteten Elemente (100) mit ihrem oberen Abschnitt zur Außenseite hin weisen und deren Beine (101, 102) zu dem modularen Verbindungselement (80) hin divergieren.

32. Modulares Verbindungselement nach Anspruch 30, bei dem die elektrischen Schaltungen eine Schaltereinrichtung (S) aufweisen, ferner die Einschubstecker (88a; 88b) die in die Anschlußöffnungen (68; 168) der neutralen Schiene in dem modularen Ausgangselement (3) des Schaltschranks einzustecken sind, mit den Einschubsteckern (86a, 86b) verbunden sind, die in die Anschlußöffnungen (72; 172) der Extraschiene (70: 174) in dem modularen Ausgangselement (3) einzustecken sind, wobei der Einschubstecker oder die Einschubstecker (87a; 87b, 87b', 87b''), welche in die Anschlußöffnungen (68; 168) der Phasenschiene oder der Phasenschienen (64; 164) in dem modularen Ausgangselement (3) einzuschieben sind, mit den Einschubsteckern (85a: 85b, 85b', 85b'') verbunden sind, welche in die Anschlußöffnungen (72; 172) der Extraschiene oder der Extraschienen (70; 174) in dem modularen Ausgangselement (3) einzustecken sind.

33. Modulares Verbindungselement nach einem der Ansprüche 27 bis 31, bei dem die elektrischen Schaltungen einen Hilfsschalter aufweisen, der einen Schutz gegenüber Erdfehlerströmen und/oder Überlastungsströmen bietet.

34. Modulares Verbindungselement nach einem der Ansprüche 27 bis 30, bei dem die elektrischen Schaltungen einen Klingeltransformator (T) aufweisen.

35. Modulares Verbindungselement nach einem der Ansprüche 27 bis 30, bei dem die elektrischen Schaltungen eine Zeitsteuer-Schaltereinrichtung (121; 131) aufweisen.

36. Modulares Verbindungselement nach einem der Ansprüche 27 bis 35, bei dem die Kontakte und Anschlüsse (82-87) auf einem Basiselement vorgesehen sind und bei dem die elektrischen Schaltungen (S; T; 121; 131) als abnehmbare getrennte Einheiten zur Befestigung an dem Basiselement konstruiert sind.

37. Modulares Verbindungselement nach Anspruch 36, bei dem das Basiselement und eine oder mehrere der getrennten Schaltungseinheiten ein integrales kastenförmiges Element formen.

## Revendications

1. Boîte de distribution pour installations électriques, comprenant un élément d'entrée (2), un élément de sortie (3) et au moins un élément de connexion amovible (80) destiné à raccorder entre eux les éléments d'entrée et de sortie (2, 3), caractérisée en ce que la boîte de distribution se présente sous forme de système modulaire comprenant un élément d'entrée modulaire (2), qui peut être installé séparément et contient un limiteur de courant (SBE) et le cablage électrique correspondant, des contacts et des bornes (40) pour le raccordement, d'une part, d'une ligne d'alimentation de courant du réseau (41) et, d'autre part, des contacts et des bornes (23, 25, 27; 35) pour le raccordement à des contacts et des bornes (82 à 84) correspondants d'un élément de connexion modulaire amovible (80), et un élément de sortie modulaire (3) qui peut être installé séparément et présente des contacts et des bornes (79; 179) pour le raccordement, d'une part, de lignes de sortie (78) à l'installation électrique et, d'autre part, des contacts et des bornes (68, 72; 168, 172) pour le raccordement à des contacts et des bornes (85 à 87) correspondants de l'élément de connexion modulaire amovible (80).

2. Boîte de distribution suivant la revendication 1, dans laquelle les contacts et les bornes des éléments d'entrée et de sortie modulaires (2, 3), d'une part, et les contacts et les bornes des éléments de connexion modulaires (80), d'autre part, se présentent sous forme de fiches et d'ouvertures de borne embrochables correspondantes destinées à recevoir les fiches embrochables de manière serrée, mais amovible.

3. Boîte de distribution suivant la revendication 2, dans laquelle les contacts et les bornes des éléments d'entrée et de sortie modulaires (2, 3) se présentent sous forme d'ouvertures de borne (23, 25, 27; 35: 68, 72; 168, 172) qui sont raccordées à des conducteurs électriques, tandis que les contacts et les bornes des éléments de connexion modulaires (80) se présentent sous forme de fiches embrochables (82 à 87) correspondantes.

4. Boîte de distribution suivant la revendication 3, dans laquelle lesdits conducteurs électriques des éléments d'entrée et de sortie modulaires (2, 3) consistent en des rails conducteurs (2, 24, 26; 30, 31, 32: 64, 70; 164, 174) pourvus, chacun, d'ouvertures de borne (23, 25, 27; 35: 68, 72; 168, 172) destinées à recevoir des fiches embrochables correspondantes (82 à 87) des éléments de connexion modulaires (80), les ouvertures de borne des rails conducteurs étant alignées sur des ouvertures embrochables (14, 15, 17; 61a-b, 62a-b) dans la paroi frontale (8c; 51) respectivement de l'élément d'entrée modulaire (2) et de l'élément de sortie modulaire (3), les ouvertures de borne (23, 25, 27; 35: 68, 72; 168, 172) et les ouvertures embrochables (14, 15, 17; 61a-b, 62a-b) alignées sur ces premières étant placées dans un ordre tel que la possibilité d'insérer les fiches embrochables des éléments de connexion modulaires (80) dans des ouvertures de borne non-correspondantes des éléments d'entrée et de sortie modulaires (2, 3) est évitée.

5. Boîte de distribution suivant la revendication 4, dans laquelle les rails conducteurs de l'élément d'entrée modulaire (2) comprennent un rail auxiliaire (22) à raccorder à une ligne auxiliaire, un rail neutre (24) à raccorder à une ligne neutre et un rail monophasé (26) ou un rail triphasé (30, 31, 32) à raccorder à une ligne d'alimentation de courant, lesdits rails (22, 24, 26; 30, 31, 32) étant montés l'un au-dessous de l'autre, vu dans le sens vertical de la boîte de distribution et chaque rail (22, 24, 26; 30, 31, 32) étant pourvu d'un certain nombre d'ouvertures de borne (23, 25, 27; 35) présentant un espacement égal entre elles, vu dans le sens horizontal de la boîte de distribution, espacements qui sont égaux pour le rail auxiliaire (22), le rail neutre (24) et le rail monophasé (26) et l'espacement entre les ouvertures de borne (35) d'un rail triphasé (30, 31, 32) étant deux fois l'espacement entre les ouvertures de borne (23, 25, 27) des rails auxiliaire, neutre ou monophasé (22, 24, 26), les ouvertures de borne (23, 25, 27; 35) étant ordonnées de manière que les ouvertures de borne dans un rail sont décalées dans le sens horizontal par rapport aux ouvertures de borne dans le rail inférieur et/ou supérieur.

6. Boîte de distribution suivant la revendication 5, dans laquelle le rail supérieur est un rail auxiliaire (22), le rail au-dessous est un rail neutre (24) et le rail inférieur est un rail de phase (26; 30, 31, 32), la paroi frontale (8c) de l'élément d'entrée modulaire (2) étant pourvue, dans le rail de phase inférieur (26; 30, 31, 32), d'une rangée d'ouvertures (R, S, T) qui, vu dans le sens horizontal, se trouvent à un espacement égal entre elles, lequel est égal à l'espacement entre les ouvertures de borne (35) d'un rail triphasé (30, 31, 32), et étant pourvu, dans le rail neutre (24), d'une rangée d'ouvertures embrochables (N) qui se trouvent à un espacement entre elles qui est deux fois l'espacement entre les ouvertures embrochables (R, S, T) dans le rail de phase (26; 30, 31, 32), et étant pourvu, dans le rail auxiliaire (22), d'une rangée d'ouvertures embrochables (A) qui se trouvent à un espacement entre elles qui est deux fois l'espacement entre les ouvertures embrochables (R, S, T) dans le rail de phase (26; 30, 31, 32), les ouvertures embrochables (N) dans le rail neutre (24) étant décalées, vu dans le sens horizontal, par rapport aux ouvertures embrochables (A) dans le rail auxiliaire (22) sur un espacement égal à l'espacement entre les ouvertures embrochables (R, S, T) dans le rail de phase (26; 30, 31, 32), et les ouvertures embrochables (A) dans le rail auxiliaire (22) et les ouvertures embrochables (N) dans le rail neutre (24) étant, vu dans le sens vertical, alignées sur une ouverture embrochable (R, S, T) dans le rail de phase (26; 30, 31, 32).

7. Boîte de distribution suivant la revendication 6, dans laquelle le rail de phase est un rail monophasé (26) dont les ouvertures de borne (27) sont disposées de manière à être alignées sur les ouvertures de borne (23) dans le rail auxiliaire (22), vu dans le sens vertical.

8. Boîte de distribution suivant la revendication 6, dans laquelle le rail de phase est un rail triphasé (30, 31, 32) pourvu de trois ouvertures de borne ou groupes de trois ouvertures de borne (35), toutes les ouvertures de borne se trouvant à un espacement égal entre elles, la première ouverture de borne (35), vu dans le sens vertical, étant alignée sur la première ouverture de borne (23) du rail auxiliaire (22).

9. Boîte de distribution suivant la revendication 8, dans laquelle le rail triphasé est constitué de trois rails conducteurs en forme de bande (30, 31, 32) qui sont séparés l'un de l'autre par des cloisons isolantes intermédiaires (38, 39) et se composent d'un segment de corps longitudinal (33) et de saillies en forme de languettes (34) qui s'élèvent vers le haut à partir du segment de corps (33), vu dans le sens vertical, saillies en forme de languettes (34) qui sont pourvues d'une ouverture de borne (35), les saillies en forme de languettes (34) des rails conducteurs respectifs (30, 31, 32) étant décalées l'une par rapport à l'autre, vu dans le sens horizontal, de manière que les ouvertures de borne (35) successives du rail triphasé formé de cette manière se trouvent à un espacement égal entre elles.

10. Boîte de distribution suivant la revendication 7 ou 9, dans laquelle les rails de phase (26; 30, 31, 32) possèdent, chacun, aux extrémités respectives, des saillies en forme de languettes (28; 36) qui font saillie vers le bas à partir du segment de corps, vu dans le sens vertical, lesdites saillies en forme de languettes (28; 36) en saillie vers le bas étant pourvues d'une ouverture de borne (29; 37) qui sont alignées sur les ouvertures embrochables (R, S, T) réalisées dans la paroi frontale (8c) de l'élément d'entrée (2) et destinées à recevoir des fiches embrochables d'un élément de connexion à insérer pour le raccordement de l'élément d'entrée modulaire (2) de la boîte de distribution à un autre élément d'entrée modulaire (2) d'une boîte de distribution d'extension à positionner le long de cette dernière.

11. Boîte de distribution suivant l'une quelconque des revendications 5 à 10, dans laquelle les rails conducteurs (22, 24, 26; 30, 31, 32) de l'élément d'entrée modulaire (2) sont logés dans un conteneur à rails (7), conteneur à rails (7) qui est subdivisé en compartiments (9 à 11) qui s'étendent sur la largeur du conteneur (7) et sont séparés l'un de l'autre, vu dans le sens vertical, compartiments (9 à 11) dans lesquels sont logés respectivement le rail auxiliaire (22), le rail neutre (24) et le rail de phase ou les rails de phase (26; 30, 31, 32).

12. Boîte de distribution suivant l'une quelconque des revendications précédentes, dans laquelle l'élément d'entrée modulaire (2) se compose des trois parties suivantes:
a. une section principale (6) en forme de conteneur, destinée à y loger un limiteur de courant avec le cablage et les éléments de circuit associés,
b. une section de rails (7) en forme de conteneur, qui est positionnée à l'intérieur de la section principale (6) et sert à y loger les rails conducteurs (22, 24, 26; 30, 31, 32), l'espace intérieur de cette section de conteneur (7) étant séparé par une cloison (7c) de la section principale (6), la section de rails (7) étant fixée par des charnières (7') à une paroi latérale (6a) de la section principale (6), et
c. une section de couvercle en forme de conteneur (8), destinée à être montée de manière à recouvrir la section principale (6) et la section de rails (7) y positionnée, la section de couvercle (8) présentant une paroi latérale (8b) qui est fixée par des charnières (8') à une paroi latérale (6b) de la section principale (6), paroi latérale (6b) qui est opposée à la paroi latérale (6a) de la section principale (6) à laquelle est fixée de manière articulée la section de conteneur à rails (7), la section de couvercle (8) étant pourvue d'ouvertures embrochables (A, N, R, S, T) qui sont alignées sur les ouvertures de borne (23, 25, 27, 29; 35, 37) des rails conducteurs (22, 24, 26; 30, 31, 32).

13. Boîte de distribution suivant la revendication 12, dans laquelle la section principale (6), la section de rails (7) et la section de couvercle (8), y compris les fixations articulées (7', 8'), sont produites en une seule pièce en une matière plastique, par moulage par injection.

14. Boîte de distribution suivant l'une quelconque des revendications précédentes, dans laquelle l'élément de sortie modulaire (3) est pourvu au moins de rails neutre et de phase (64; 164), chaque rail étant pourvu d'une ouverture de borne (68; 168) pour l'enfichage d'un contact (87, 88) correspondant de l'élément de connexion modulaire (80) et d'un contact (79; 179) destiné à raccorder respectivement un conducteur neutre et de phase (78) d'une ligne d'alimentation sortante à l'installation électrique.

15. Boîte de distribution suivant la revendication 14, dans laquelle les rails neutre et de phase (64; 164) sont positionnés adjacents l'un à l'autre, dans un sens horizontal, dans un compartiment (62), compartiment (62) qui est pourvu, dans sa paroi frontale (51), d'ouvertures embrochables (62a, 62b) qui sont alignées sur les ouvertures de borne (68; 168) des rails neutre et de phase (64; 164) destinées à recevoir les contacts (87, 88) des éléments de connexion modulaires (80), les ouvertures de borne (68; 168) des rails neutre et de phase (64; 164) et les ouvertures embrochables (62a, 62b) dans la paroi frontale (51) du compartiment (62) présentant un espacement entre elles qui est égal à l'espacement entre elles des ouvertures de borne (23, 25, 27; 35) des rails neutre et de phase (22, 24, 26; 30 à 33) de l'élément d'entrée modulaire (2).

16. Boîte de distribution suivant la revendication 15, dans laquelle l'élément de sortie modulaire (3) est pourvu d'un jeu supplémentaire de rails conducteurs (70; 174) séparés des rails neutre et de phase (64; 164), lesdits rails conducteurs supplémentaires (70; 174) présentant, d'un côté, des ouvertures de borne (72; 172) positionnées au-dessus ou au-dessous des ouvertures de borne (68; 168) des rails neutre et de phase (64; 164) et alignées sur les ouvertures embrochables (61a, 61b) dans la paroi frontale (51) de l'élément de sortie modulaire (3), et présentant, de l'autre côté, des contacts pour les lignes à raccorder à des installations secondaires.

17. Boîte de distribution suivant la revendication 16, dans laquelle les ouvertes de borne (68; 168) des rails neutre et de phase (64; 164) sont ordonnées en une rangée horizontale et, en cas d'utilisation d'une connexion monophasée, les rails neutre et de phase (64; 164) sont montés en alternance dans cette rangée tandis que, en cas d'utilisation d'une connexion triphasée, trois rails de phase séparés et un rail neutre sont montés en alternance en une rangée.

18. Boîte de distribution suivant la revendication 16, dans laquelle trois rangées d'ouvertures embrochables (61', 62', 63') l'une au-dessous de l'autre et positionnées dans des compartiments séparés sont prévues dans la paroi frontale de l'élément de sortie modulaire (3'), une rangée d'ouvertures embrochables (63') étant destinée à des connexions monophasées, de manière qu'un rail neutre et de phase (64') sont montés en alternance dans le compartiment respectif, une rangée d'ouvertures embrochables (61') étant destinée à une connexion triphasée, de manière que, en alternance dans trois compartiments adjacents correspondants, est monté un rail de phase (90') et un rail neutre (90') est monté dans le compartiment suivant, tandis que la troisième rangée d'ouvertures embrochables (62') appartient aux compartiments dans lesquels sont montés des rails conducteurs (74') supplémentaires.

19. Boîte de distribution suivant l'une quelconque des revendications 14 à 18, dans laquelle les rails (64, 70; 164, 174; 64', 74; 90) dans l'élément de sortie modulaire (3; 3') sont essentiellement en forme de "U" dont une branche (65, 71) est positionnée contre ou à une courte distance de la paroi frontale (51) du boîtier en forme de boîte (50) de l'élément de sortie modulaire (3) et pourvue d'une ouverture de borne (68, 72) alignée sur une ouverture embrochable (61a, 61b, 62a, 62b) dans la paroi frontale (51), et le haut (67c, 74c) de l'autre branche (67, 74) étant situé contre la paroi supérieure (54) du boîtier (50), en une position qui aboute à une ouverture de borne (62aa, 62bb, 63a, 63b) et, vu dans le sens vertical, la section transversale (73a) des rails en forme de "U" (70) situés au-dessous étant supérieure à la section transversale (66) des rails en forme de "U" (64) situés au-dessus et où le haut (74c) des rails en forme de "U" (70) situés au-dessous est plus éloigné de la paroi frontale (51) du boitier (50) que le haut (67c) des rails en forme de "U" (64) situés au-dessus.

20. Boîte de distribution suivant l'une quelconque des revendications 14 à 19, dans laquelle l'élément de sortie modulaire (3) consiste en un boîtier en forme de boîte (50) qui est subdivisé, par des cloisons horizontales (55, 56) et des cloisons verticales (60), en compartiments séparés destinés à y loger un rail conducteur (64, 70; 64', 74', 90'; 164, 174).

21. Boîte de distribution suivant l'une quelconque des revendications 14 à 19, dans laquelle l'élément de sortie modulaire (3) se compose de compartiments qui sont fixés l'un à l'autre de manière amovible et contiennent au moins un rail conducteur (64, 70; 64', 74', 90'; 164, 174).

22. Boîte de distribution suivant la revendication 10, dans laquelle au moins une boîte de distribution d'extension est positionnée le long de la première, ladite boîte de distribution d'extension comprenant un élément d'entrée modulaire (2) présentant au moins un rail auxiliaire (22), un rail neutre (24) et un rail monophasé (26) ou un rail triphasé (30, 31, 32), les éléments d'entrée modulaires (2) des boîtes de distribution étant raccordés électriquement à l'aide d'un élément de connexion (104) inséré dans les ouvertures de borne (29; 37) respectives des rails (26; 30, 31, 32).

23. Boîte de distribution suivant la revendication 22, dans laquelle un limiteur de courant est également logé dans l'élément d'entrée modulaire (2) de la boîte de distribution d'extension.

24. Boîte de distribution destinée à être utilisée comme boîte de distribution d'extension suivant la revendication 22 ou 23, comprenant un élément d'entrée modulaire (2), un élément de sortie modulaire (3) et au moins un élément de connexion modulaire (80).

25. Boîte de distribution suivant l'une quelconque des revendications précédentes, comprenant un évidement en forme de canal (3a) destiné à l'installation de lignes de signaux supplémentaires, de lignes neutres, de lignes de mise à la terre supplémentaires et autres.

26. Boîte de distribution suivant la revendication 25, dans laquelle l'élément d'entrée modulaire (2) et l'élément de sortie modulaire (3) sont montés dans un boîtier inférieur (1), l'évidement en forme de canal étant formé par le fait que l'élément d'entrée modulaire (2) et l'élément de sortie modulaire (3) sont montés à une distance l'un de l'autre, vu dans le sens vertical.

27. Elément de connexion modulaire, comprenant des circuits électriques (S; T; 121; 131) et des contacts et des bornes (23, 25, 27; 35; 68, 72; 168, 172) d'éléments d'entrée et de sortie modulaires (2, 3) d'une boîte de distribution, l'élément de connexion modulaire (80) présentant de moyens pour créer une connexion prédéterminée entre les éléments d'entrée et de sortie modulaires (2, 3) par un positionnement correct de l'élément de connexion modulaire (80) sur les éléments d'entrée et de sortie modulaires (2, 3).

28. Elément de connexion modulaire suivant la revendication 27, dans lequel les contacts et les bornes (82 à 87) sont disposés de manière à créer la connexion prédéterminée entre les éléments d'entrée et de sortie modulaires (2, 3) de la boîte de distribution.

29. Elément de connexion modulaire suivant la revendication 28, dans lequel les contacts et les bornes (82 à 87) consistent en des fiches embrochables destinées au raccordement amovible à des ouvertures de broche (23, 25, 27; 35; 68, 72; 168, 172) correspondantes des éléments d'entrée et de sortie modulaires (2, 3) de la boîte de distribution.

30. Elément de connexion modulaire suivant la revendication 28, dans lequel les fiches embrochables (82 à 87) sont ordonnées de telle manière que, lorsque l'élément de connexion modulaire (80) est monté sur les éléments d'entrée et de sortie modulaires (2, 3) de la boîte de distribution, un jeu de fiches embrochables (82, 83, 84) est raccordé à une ouverture de borne (23) d'un rail auxiliaire (22), une ouverture de borne (25) d'un rail neutre (24) et une ouverture de borne (27) d'un rail monophasé (26) ou trois ouvertures (35) successives d'un rail triphasé (30, 31, 32) de l'élément d'entrée modulaire (2) et un autre jeu de fiches embrochables (85 à 87) est raccordé aux ouvertures de borne (68, 72; 168, 172) d'un groupe de rails neutre et de phase (64; 164) qui vont ensemble et, si approprié, de rails conducteurs supplémentaires (70; 174), par les ouvertures de borne (72; 172) de l'élément de sortie modulaire (3).

31. Elément de connexion modulaire suivant la revendication 29 ou 30, dans lequel les fiches embrochables (82 à 87) de l'élément de connexion modulaire (80) se présentent sous forme d'éléments essentiellement en forme de "V" (100) en matériau électro-conducteur résilient, éléments en forme de "V" (100) qui sont orientés avec leur partie supérieure vers l'extérieur et dont les branches (101, 102) divergent vers l'élément de connexion modulaire (80).

32. Elément de connexion modulaire suivant la revendication 30, dans lequel les circuits électriques comprennent un moyen de commutation (S) et les fiches embrochables (88a; 88b) destinées à être enfichées dans les ouvertures de borne (68; 168) du rail neutre dans l'élément de sortie modulaire (3) de la boîte de distribution sont connectées aux fiches embrochables (86a, 86b) à enficher dans les ouvertures de borne (72; 172) du rail supplémentaire (70; 174) dans l'élément de sortie modulaire (3), tandis que la fiche embrochable ou les fiches embrochables (87a; 87b, 87b', 87b'') à enficher dans les ouvertures de borne (68; 168) du rail de phase ou des rails de phase (64; 164) dans l'élément de sortie modulaire (3) sont raccordées aux fiches embrochables (85a; 85b, 85b', 85b'') à enficher dans les ouvertures de borne (72; 172) du rail supplémentaire ou des rails supplémentaires (70; 174) dans l'élément de sortie modulaire (3).

33. Elément de connexion modulaire suivant l'une quelconque des revendications 27 à 31, dans lequel les circuits électriques comprennent un interrupteur auxiliaire protégeant contre les dérangements dus à une mise accidentelle à la terre et/ou les courants de surcharge.

34. Elément de connexion modulaire suivant l'une quelconque des revendications 27 à 30, dans lequel les circuits électriques comprennent un transformateur de sonnette (T).

35. Elément de connexion modulaire suivant l'une quelconque des revendications 27 à 30, dans lequel les circuits électriques comprennent un moyen de temporisateur (121; 131).

36. Elément de connexion modulaire suivant l'une quelconque des revendications 27 à 35, dans lequel les contacts et les bornes (82 à 87) sont prévues sur un élément d'embase et les circuits électriques (S; T; 121; 131) se présenent sous forme d'unités séparées amovibles destinées à être montées sur ledit élément d'embase.

37. Elément de connexion modulaire suivant la revendication 36, dans lequel l'élément d'embase et une ou plusieurs desdites unités de circuit séparées forment un élément solidaire en forme de boîte.
